# EUROPEAN PATENT SPECIFICATION

(11) **EP 1 943 162 B1**
(45) Date of publication and mention of the grant of the patent: **22.02.2012**
(21) Application number: 06836840.6
(22) Date of filing: 02.11.2006
(51) Int. Cl.: G01F 11/20

(54) **LIQUID CONCENTRATE/EXTRACT BEVERAGE DISPENSER WITH REPLACEABLE CONCENTRATE/EXTRACT CARTRIDGE**
FLÜSSIGKEITSKONZENTRAT-/-EXTRAKT-GETRÄNKESPENDER MIT AUSTAUSCHBARER KONZENTRAT/EXTRAKT-PATRONE
DISTRIBUTEUR DE BOSSIONS DE TYPE CONCENTRÉ/EXTRAIT LIQUIDE AVEC CARTOUCHE REMPLAÇABLE DE CONCENTRÉ/D'EXTRAIT

(30) Priority: 03.11.2005 US 266695; 25.04.2006 US 794777 P; 18.09.2006 US 845310 P
(43) Date of publication of application: 16.07.2008
(73) Proprietor: Intelligent Coffee Company, L.L.C., Scottsdale AZ 85251 (US)
(72) Inventor: GIRARD, Jeffrey, J., Gilbert, Arizona 85234 (US); PIRSHAFIEY, Nasser, Thousand Oaks, California 91362 (US); VASSAUX, Mario, E., Scottsdale, Arizona 85260 (US); KAY, Heather B., Mesa, Arizona 85204 (US); GREENWALD, Shlomo, Ithaca, New York 14850 (US); GREENWALD, Zipora, Ithaca, New York 14850 (US)
(74) Representative: Perkins, Sarah
(86) International application number: PCT/US2006/042878
(87) International publication number: WO 2007/056097

(56) References cited:
- WO-A-2004/104527
- WO-A-2005/079361
- DE-A1- 19 523 816
- US-A1- 2004 074 921
- US-A1- 2004 226 962
- US-A1- 2006 283 889

## Description

BACKGROUND

The present invention generally provides a dispensing system that can be utilized in a number of different dispensing applications, with or without a diluent.

Moreover the present invention relates to dispensing systems which dispense fluids in an exact metered fashion. More particularly, the invention relates to dispensing systems used by consumers for completing a variety of tasks to increase efficiency.

Beverage dispensers are known for making a beverage from a liquid concentrate/extract. In one known prior art reference, a pressurized liquid canister of liquid beverage concentrate/extract is placed within a pitcher-shaped device having a mechanism for releasing a predetermined amount of liquid concentrate/extract from the pressurized canister into a beverage mixing chamber. A heated liquid reservoir is located at the bottom of the vessel and heated liquid is also forced upwardly into the mixing chamber where the mixed beverage is formed in the device prior to being poured. This device has several drawbacks due to the complex nature of the dispensing mechanism and the need to clean out the mixing chamber in the device after each use. It is also known to provide a coffee machine for use with shelf-stable liquid coffee concentrate/extract. The liquid coffee concentrate/extract is poured into a reservoir in the coffee maker and a predetermined amount of the concentrate/extract is moved from the reservoir to the brewing chamber, where it is mixed with heated water prior to being dispensed into a carafe. While this device overcomes the need for coffee filters and ground coffee and allows the use of a shelf-stable liquid coffee concentrate/extract, the entire machine must be cleaned after use, due to the fact that the coffee concentrate/extract is poured into the coffee machine prior to being delivered to a brewing chamber in the machine. Additionally, it is not possible to switch the type of beverage being dispensed in an easy and convenient manner.

Another problem with many known beverage dispensers which combine concentrate/extract and water is a poor mixing of the concentrate/extract and water. Such known dispensers often dispense a stream of concentrate/extract and water which is not adequately mixed, and accordingly, lacking homogeneity. Complete mixing does not take place until the fluids enter a user's cup. Many users consider a stream of non-homogeneous beverage to be visually unappealing and indicative of a lack of quality of the beverage dispenser or beverage being dispensed. An unmixed stream of concentrate/extract and water dispensed by a beverage dispenser is sometimes identified by the trade term "striping" or as the "zebra effect".

It has also been suggested to provide a beverage system for brewing a beverage from a dry beverage material and a source of hot, pressurized water. The beverage material is provided in a sealed cartridge and the dispenser pierces the sealed cartridge and injects hot, pressurized water into the cartridge to brew the beverage from the beverage material. A carousel device may be provided, which allows a user to select from one of several different beverage cartridges. However, a drawback of this device is that residue from a previous beverage will remain in the hot, pressurized water-injecting area as well as in the downstream collection funnel, which directs the beverage into a user's cup. Further, in the case of typical beverage systems of this type for producing hot coffee drinks, dry coffee material including instant, non-brewed coffee product is provided. Such non-brewed coffee product typically produces coffee beverages which to at least some extent lack the distinct flavor of brewed coffee.

Additionally other consumable products such as baby formulas, detergents, and medicines are often cumbersome to mix and/or dispense in proper amounts, and require appreciable amounts of storage space. It would be desirable to provide a system which allows for the dispensing of liquid consumable products in a manageable and convenient manner for a number of different applications. It would also be desirable to allow a user to select a concentration or strength from a number of different selections so that a specific need or user's preference can be satisfied. It would also be desirable to provide a dispenser that allows a user to dispense an exact desired amount of product and that does not waste excess concentrate/extract in a user's container or in the dispenser itself. It would be further desirable to allow a user to select from multiple product types and to select from multiple container sizes, while still providing a product at a desired strength. Further, it would be desirable to provide a dispenser which dispenses a mixture of concentrate/extract and water or other diluent which is well-mixed and homogeneous prior to entering a container.

W0 2005/079361 discloses the Applicant's prior dispenser for dispensing: a beverage into a container; fluid medicine; and, fluid food products such as baby food.

SUMMARY

The present invention provides a liquid dispensing system in accordance with claim 1. The liquid dispensing system uses a removably insertable concentrate/extract cartridge. The liquid dispensing system includes a housing with a cartridge receiving area, and a dispensing actuator located in the housing. A cartridge which includes a dispensing aperture is positioned in the receiving area to dispense the liquid into a dispensing area. A controller is located in the housing to control the actuator to discharge the liquid from the cartridge into the dispensing area. This liquid dispenser can be used in various dispensing applications, including bottle office- style hot/cold water dispensers, dish washers, washing machines, and home and commercial refrigerators.

BRIEF DESCRIPTION OF THE DRAWING(S)

The preferred embodiments of the present invention are described below with reference to the drawing figures where like numerals represent like elements throughout.

Figure 1 is a cross-sectional view of a concentrate/extract cartridge in a beverage dispenser, not in accordance with the present invention.

Figure 2 is a left side perspective view of a beverage dispenser of Figure 1.

Figure 3 is a perspective view of the dispenser with the access door for the concentrate/extract cartridge opened for insertion or removal of the cartridge.

Figure 4 is a front elevation view of the dispenser of Figure 1.

Figure 5 is a right side perspective view of the beverage dispenser of Figure 1 with the housing removed.

Figure 6 is a front elevational view of the beverage dispenser of Figure 1 with the housing removed.

Figure 7 is top plan view of the beverage dispenser of Figure 1 with the housing removed.

Figure 8 is a left side elevational view of the beverage dispenser of Figure 1 with the housing removed.

Figure 9 is a cross sectional view showing a first example of a pump device of a cartridge located in a dispensing actuator shown in a closed position.

Figure 10 is a cross-sectional view of the pump device and dispensing actuator of Figure 9 shown in an open position.

Figure 11 is a cross-sectional view of the pump device and dispensing actuator of the dispenser of Figure 9, the pump device and dispensing actuator shown in the closed position.

Figure 12 is a perspective view of the pump device of the beverage dispenser of Figure 9 showing a top end of the pump device.

Figure 13 is a perspective view of the pump device of the beverage dispenser of Figure 9 showing a bottom end of the pump device.

Figures 14-15 are cross-sectional views of a second example of a pump device for the cartridge liquid dispenser, shown in a dispensing actuator.

Figures 16-17 are cross-sectional views of third pump device for the cartridge liquid dispenser, shown in a dispensing actuator.

Figure 18 is a perspective view of a fourth example of a concentrate/extract pump device.

Figure 19 is an exploded perspective view of the pump device of Figure 18.

Figure 20 is an elevational view of the pump device of Figure 18.

Figure 21 is a sectional view of a concentrate/extract cartridge according to the fourth example of the present invention being assembled.

Figure 22 is a cross-sectional view of a fifth pump device for a concentrate/extract cartridge for use in a liquid dispenser.

Figure 23 is a cross sectional view of the concentrate/extract cartridge being assembled by inserting the pump device into the socket in the concentrate container.

Figure 24 is a perspective view of a dispensing assembly according to a sixth example with a loading door in an open position, the cartridge in a cartridge receiving area.

Figure 25 is an enlarged perspective view of a portion of the cartridge receiving area of Figure 24 showing the pump mechanism inserted in the activator body.

Figures 26-28 are left side perspective views of a dispensing assembly incorporated in a dishwasher according to a preferred embodiment of the present invention.

Figures 29-31 are perspective views of a plurality of dispensing assemblies incorporated into a clothes washer according to a further embodiment of the present invention.

Figures 32-33 are perspective views of a dispensing assembly incorporated into a medicine dispenser.

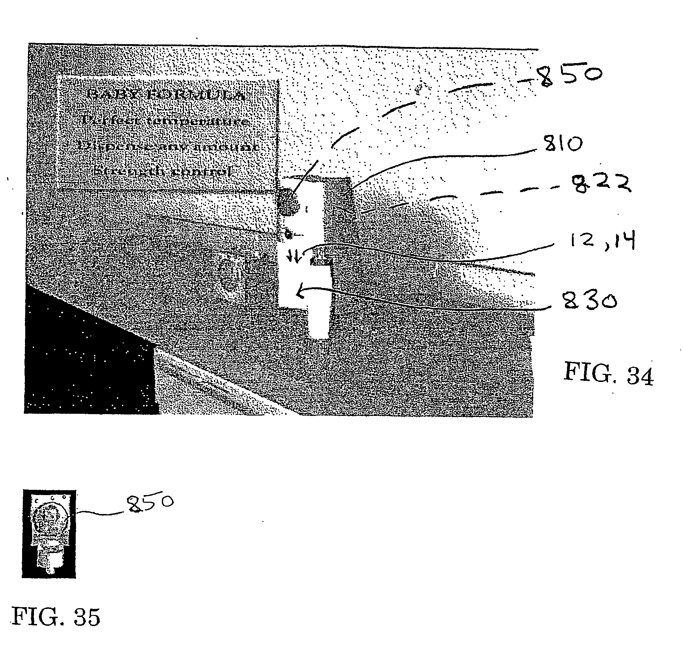

Figure Figures 34-35 are perspective views of a dispensing assembly incorporated into a bottle-fed beverage dispenser.

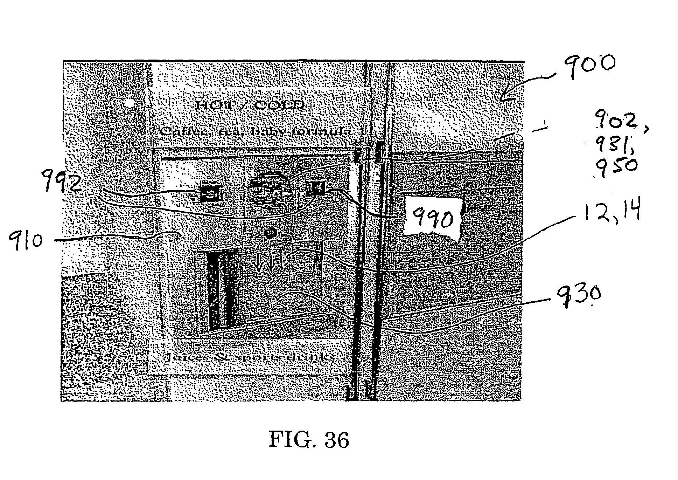

Figure 36 is a perspective view of a liquid dispenser with a concentrate/extract cartridge incorporated into a refrigerator according to a third preferred embodiment of the present invention.

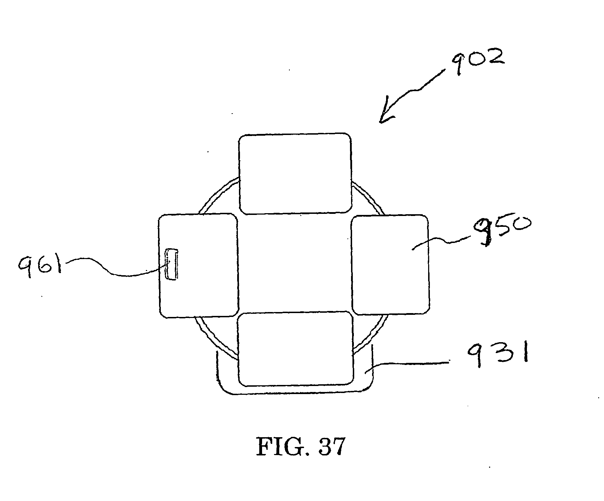

Figure 37 is a top plan view of a concentrate/extract cartridge carousel included with the home appliance of Figure 36.

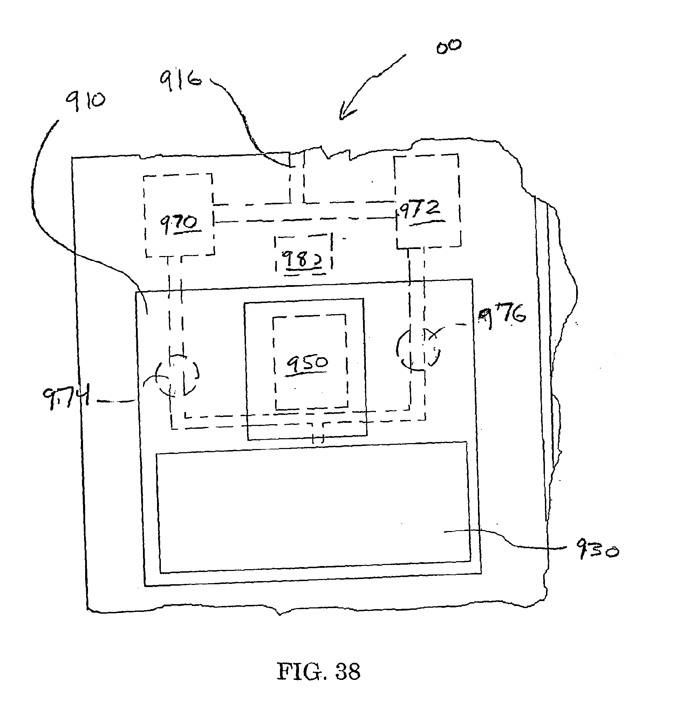

Figure 38 is a partial front elevational view of the home appliance of Figure 36.

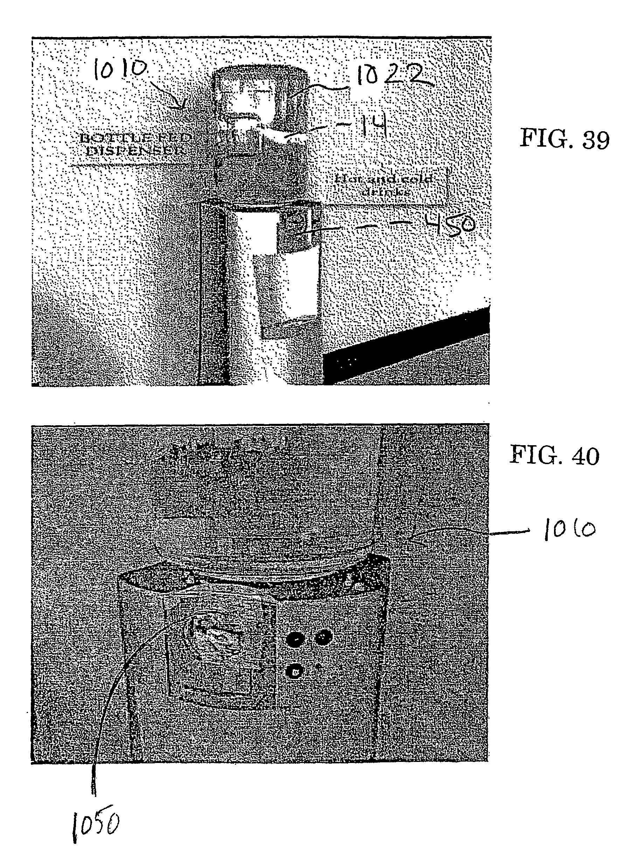

Figures 39-40 are perspective views of a dispensing assembly incorporated into a water dispenser according to a fourth preferred embodiment of the present invention.

DETAILED DESCRIPTION OF THE PREFERRED EMBODIMENT(S)

Certain terminology is used in the following description for convenience only and is not considered limiting. Words such as "front", "back", "top" and "bottom" designate directions in the drawings to which reference is made. This terminology includes the words specifically noted above, derivatives thereof and words of similar import. Additionally, the terms "a" and "one" are defined as including one or more of the referenced item unless specifically noted. The phrase "at least one" followed by a list of two or more items, such as "A, B, or C," means any individual one of A, B or C as well as any combination thereof.

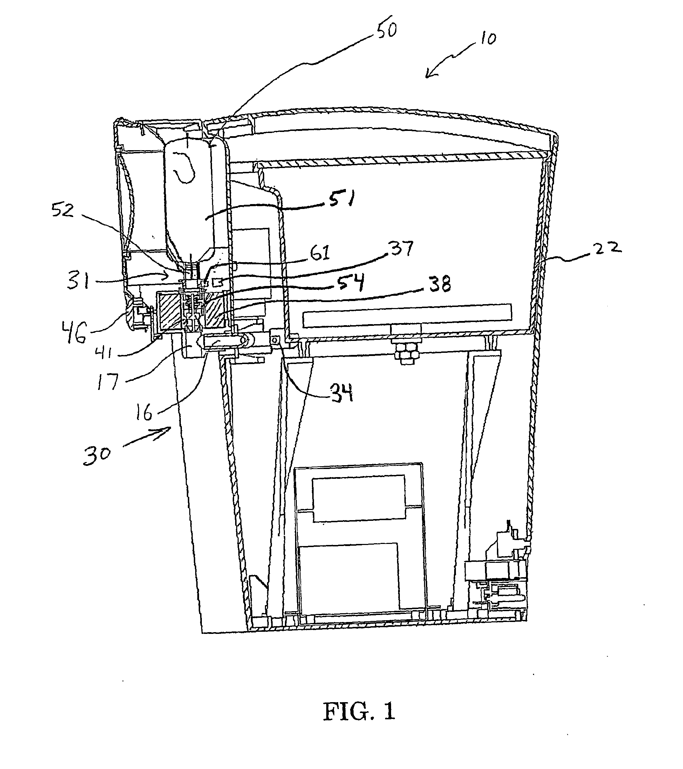

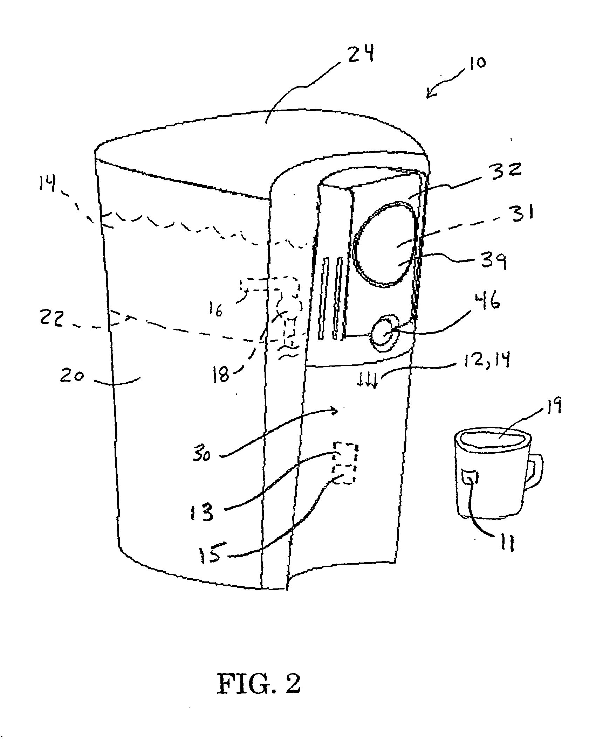

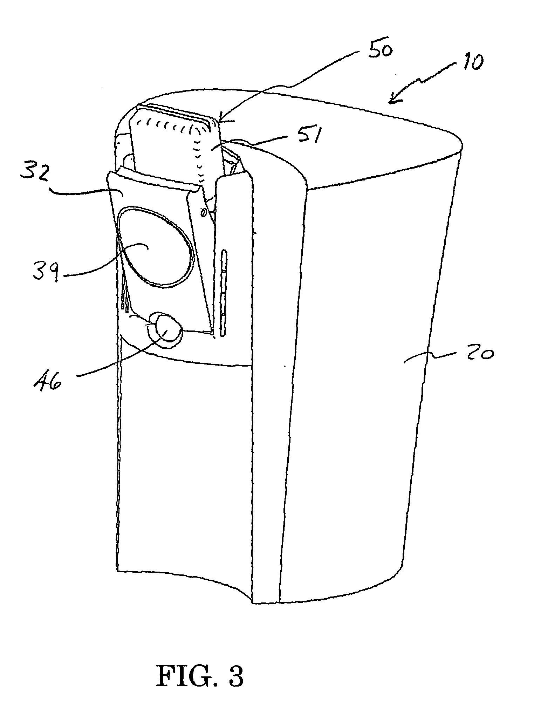

Figures 1-4, show a beverage dispenser 10 for use with a liquid/extract cartridge 50, adapted to dispense a beverage comprising a liquid extract (designated by arrows 12 in a dispensing area 30 in Figure 2) and a diluent 14 (in a reservoir 22 and designated by arrows 14 in Figure 2) is provided. The dispenser 10 functions in a manner similar to Applicant's prior dispenser referred to earlier herein. For use with warm beverages the diluent reservoir 22 may be heated by a heating element.

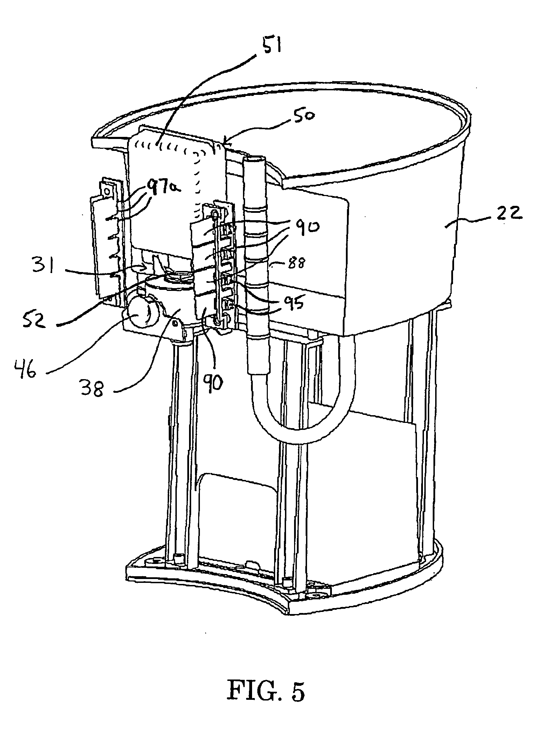

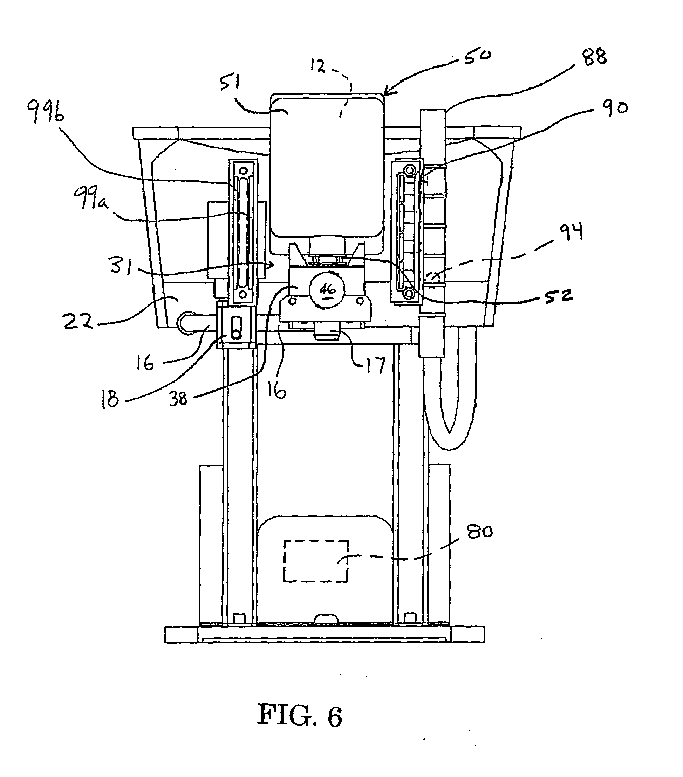

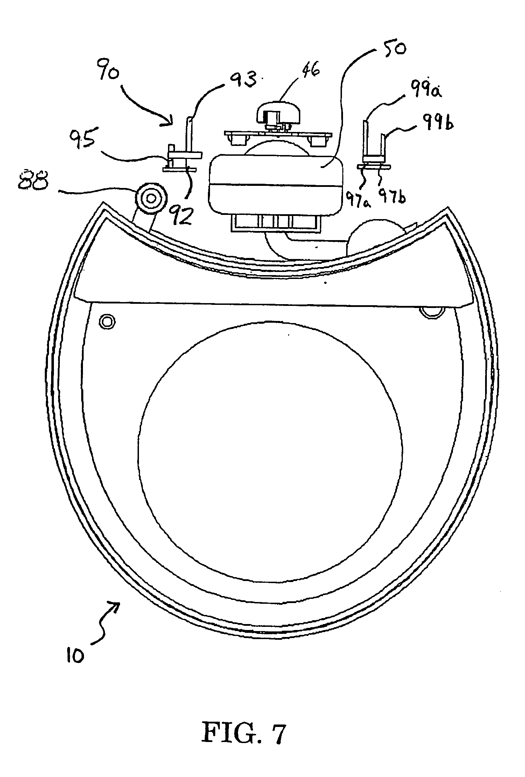

As shown in Figures 1, 2 and 6, preferably a reservoir supply line 16 is connected to the reservoir 22 and delivers the diluent 14 to the dispensing area. The supply line 16 is preferably connected to a control valve 18 that can dispense water from the reservoir to the dispensing area at varying rates. The control valve 18 is preferably a solenoid driven pinch valve, as shown; however, any suitable control valve can be used. Alternatively, the supply line 16 could be connected to a pump for emptying diluent 14 from the reservoir 22. Preferably, as shown in Figures 5-7, a level sensor 88 is connected to the reservoir 22 which can be used by a controller 80 to determine diluent flow rate information. The level sensor 88 can be a float 94 arrangement that either provides the level information directly, for example by a lever attached to the float 94, or indirectly, such as by the float 94 being magnetic and tripping magnetic switches set at different levels on the outside of the reservoir 22, or by any other suitable means. This information is preferably used by the controller 80 to adjust a rate of actuation of a dispensing actuator 38, as described below, to dispense a desired amount of concentrate/extract 12 relative to an amount of dispensed diluent 14. Alternatively, based on the diluent flow rate information received, the controller 80 can control the control valve 18, or alternatively a diluent discharge pump, permitting discharge of an appropriate amount of diluent 14 relative to an amount of dispensed concentrate/extract 12. As an alternative to the level sensor, a flow rate sensor could be provided in the supply line 16 in order to measure flow rate information.

As shown in Figures 1 and 5-7, the concentrate extract cartridge 50 includes a hollow body 51 for containing the liquid concentrate/extract 12. The hollow body 51 is preferably collapsible and fabricated from a flexible laminate sheet including layers of one or more of polyethylene, polyester, and metallic foil. Alternatively, other suitable materials can be used to create the flexible laminate sheet. A spout connector 52 is preferably sealably connected to the hollow body 51. An inner layer of the hollow body 51 preferably includes features, such as sealing areas, which contact and align with cooperating features on the connector 52. During assembly, heat and pressure is applied for a predetermined period of time to the area where the hollow body 51 and the connector 52 are in contact, sealably connecting the hollow body 51 to the connector 52. Preferably, the inner layer of the hollow body 51 and the connector 52 are made of the same material, for example polyethylene, or otherwise made of compatible materials, so that when heat and/or pressure are applied, the hollow body 51 and connector 52 are sealed together. Alternatively, the connector 52 can be adhered to the hollow body 51 using any suitable adhesive and/or adhering method.

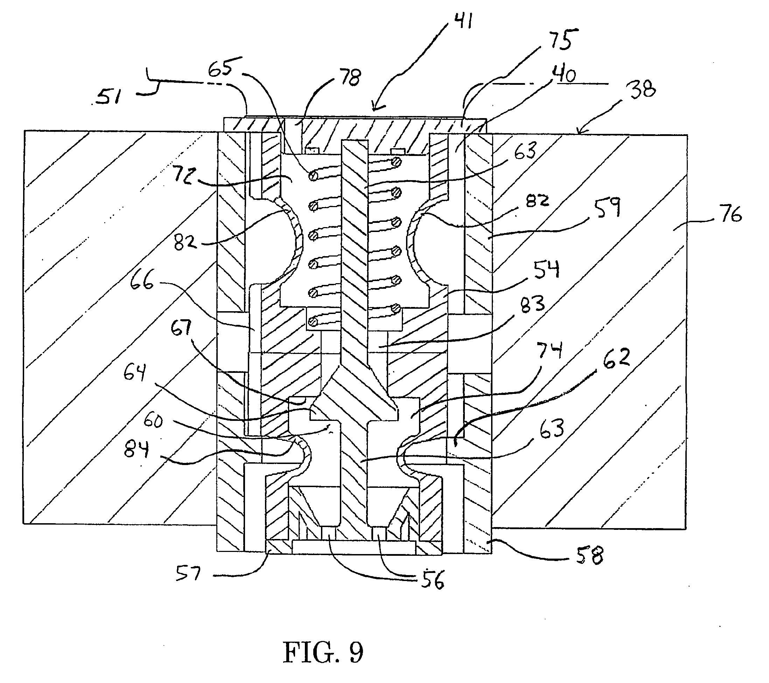

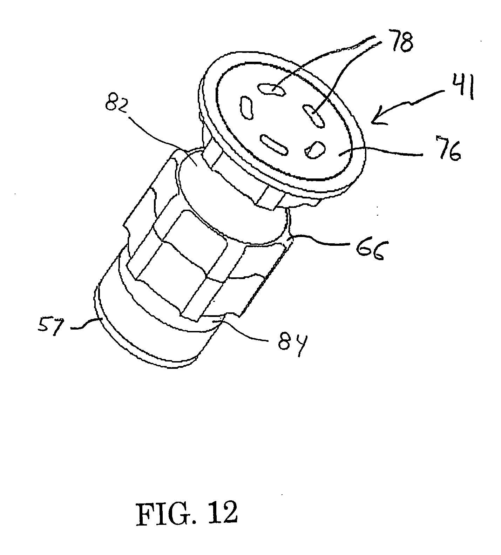

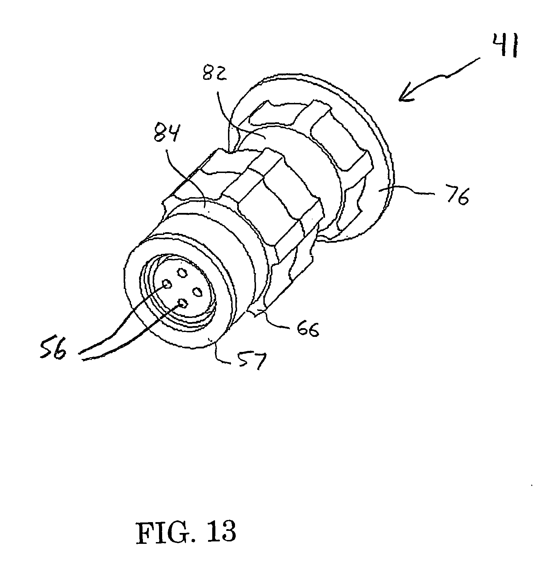

A pump device, such as the device 41 in Figure 1, is connected to the spout connector 52. The pump device is preferably adhered or mechanically fastened to the spout connector 52. Alternatively, the pump device 41 can be integrally formed with the spout connector 52. Referring to the Figures 9-13, a first example of the pump device 41 is shown in detail and includes an axially resilient dispensing tube 54 connected to a cap 75 which preferably provides the connection to the spout connector 52. The dispensing tube 54 may be fabricated from a single piece or multiple pieces connected together as shown. The cap 75 includes apertures 78 which allow liquid concentrate/extract 12 to pass from the hollow body 51 into the axially resilient dispensing tube 54. The dispensing tube 54 includes accordion-like top and bottom flexing members 82, 84 which permit volumetric adjustment of top and bottom chambers 72, 74 of the pump device 41. A valve 60 is formed by a center portion of the resilient tube which has an increased wall thickness so that it acts like a piston and which includes having a port 83 for passing a flow of fluid concentrate/extract 12 therethrough that ends at a valve seat 67. A valve stem 63 preferably having an integrally formed valve body 64 for alternately covering and uncovering the port 83 in the valve seat 67 extends through the valve body 64 and is connected to an end cap 57 at a first end thereof and connected to the top cap 75 at a second end thereof. The end cap 57 is preferably rigidly connected to an end of the dispensing tube 54. The end cap 57 includes through apertures 56, for passing a flow of the liquid concentrate/extract 12 out of the pump device 41. A spring 65 is preferably provided to bias the top flexing member 82 toward an extended position closing the valve seat 67 with the valve body 64 and resulting in the maximization of the volume of the top chamber 72 absent an application of external force. Alternatively, the spring 65 can be omitted and the flexing member 82 can be configured to provide sufficient resilience to maximize the volume of the top chamber 72.

Referring to Figures 1, 5-6 and 10, a dispensing actuator 38 is fixed within the cartridge receiving area 31 and includes an opening 40 for receiving the pump device 41 of the cartridge 50 therein. The dispensing actuator 38 also includes an electromagnet 76 which preferably comprises a wound coil or solenoid arrangement. The wound coil or solenoid can include one or more focusing rings located inside the coil to focus the magnetic flux generated.

For use with the first cartridge 50, a sliding ferromagnetic sleeve 58 is preferably concentrically aligned with the electromagnet 76. Preferably, a ferromagnetic stop member 59 is connected to the dispensing actuator 38 limiting the motion of the sliding sleeve 58 and channeling magnetic flux produced by the electromagnet 76. The ferromagnetic sleeve 58 includes a circumferential protrusion 62. When the cartridge 50 is in an installed position in the receiving area 31, bearing members 66 on the center portion of the resilient tube contact the circumferential protrusion 62 of the sliding ferromagnetic sleeve 58.

The electromagnet 76 receives current, such as alternating or direct current, from the controller 80. The controller 80 intermittently provides 24 volts over the coil to produce an intermittent direct current which induces an intermittent magnetic field.

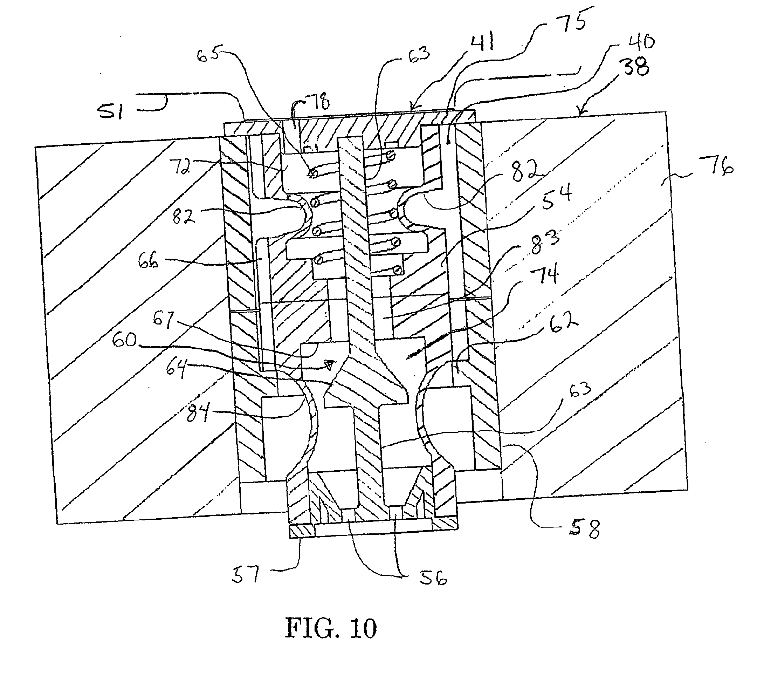

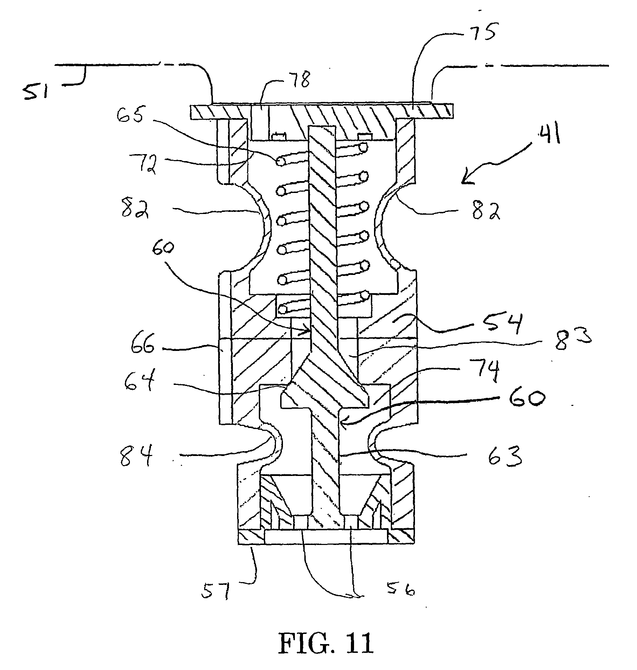

The cartridge 50 dispenses the liquid concentrate/extract 12 as follows. Current is induced in the wound coil by an applied voltage, preferably 24 volts over the electromagnet 76 as provided by the controller. Alternatively, the controller can provide other suitable voltages for producing alternating or direct current. The application of voltage causes the ferromagnetic sleeve 58 to be drawn from the position shown in Figures 9 and 11 toward the electromagnetic center of the electromagnet 76 and against the stop member 59 as shown in Figure 10. The center position of the tube 54 having the valve seat 67 follows in an upward motion with the ferromagnetic sleeve, displacing the valve seat 67 from the valve body 64 while compressing the top flexing member 82 and extending the bottom flexing member 84, as shown in Figure 10. During the upward motion of the ferromagnetic sleeve 58, liquid concentrate/extract in the top chamber 72 is forced through the port 83, as it is uncovered by the valve body 64, and into the bottom chamber 74 of the dispensing tube 54. Next, the controller cuts off voltage to the actuator 38, allowing the ferromagnetic sleeve 58 to move downwardly away from the stop member 59 by force of the spring 65 and gravity, forcing the valve seat 67 against the valve body 64, while extending the top flexing member 82 and compressing the bottom flexing member 84. During downward motion of the ferromagnetic sleeve 58, the bottom chamber 74 decreases in volume and fluid concentrate/extract in the bottom chamber is forced through the apertures 56 and out of the pump device 41, while at the same time, fluid concentrate/extract 12 from the hollow body 51 is drawn into the top chamber 72 through the cap apertures 78. The hollow body 51 is preferably collapsible and collapses to facilitate the extraction of fluid concentrate/extract 12 from the hollow body. A voltage, such as the preferred 24V DC producing voltage, or other suitable AC or DC producing voltage, is cycled on and off to provide an intermittent current for repeating the above-described process continuously until a desired amount of the liquid concentrate/extract 12 is dispensed. Alternatively, other types of actuators can be used to act against the circumferential protrusion 62 to compress the flexing member 82.

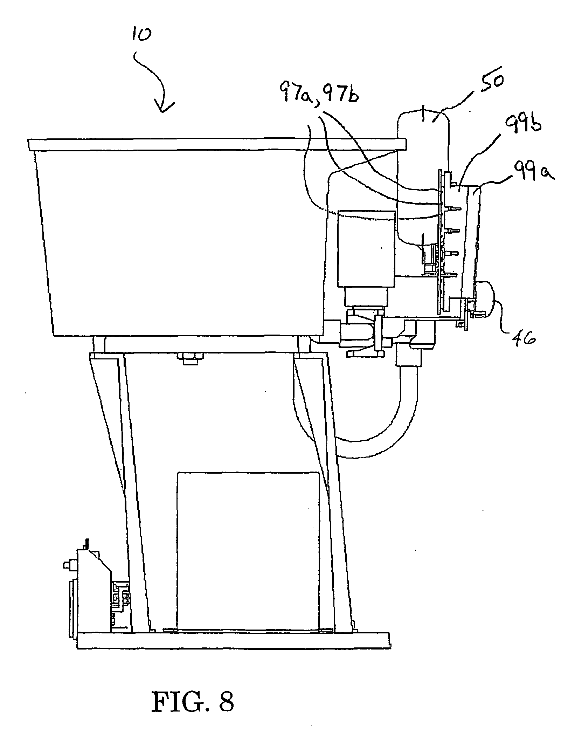

As shown in Figures 1-8, a trigger 46 is provided, which when pressed signals the controller 80 to provide an intermittent current to the electromagnet 76 to initiate the dispensing of the liquid concentrate/extract 12 from the cartridge 50. Referring to Figure 1, fluid concentrate/extract 12 dispensed from the cartridge 50 preferably enters a joining tube 17 fixed within the cartridge receiving area 31. At the same time, the controller opens the diluent control valve 18 to transfer liquid diluent 14 from the reservoir 22 through the diluent supply line 16 into the joining tube 17. A stream of diluent 14 is preferably dispensed generally into the discharge of the concentrate/extract 12 in close proximity to the dispensing tube 54. In this manner, a uniform and substantially homogenous mixture of concentrate/extract 12 and diluent 14 exits the joining tube 17 into the dispensing area 30. This configuration is useful to prevent dispensing of poorly mixed concentrate/extract, known to those skilled in the art as "striping" or the "zebra effect". Most preferably, the diluent 14 is dispensed generally perpendicular to the discharge of the concentrate/extract 12 as shown to increase mixing.

Preferably, the controller 80 continues to dispense diluent 14 for a short period of time after stopping the dispensing of the concentrate/extract 12 in order to clean the joining tube 17 of residual concentrate/extract 12. Alternatively, the joining tube 17 can be omitted, and the supply line 16 and the dispensing tube 54 of the cartridge 50 are directed such that during dispensing, a stream of discharged concentrate/extract 12 enters a stream of discharged diluent 14 to promote mixing.

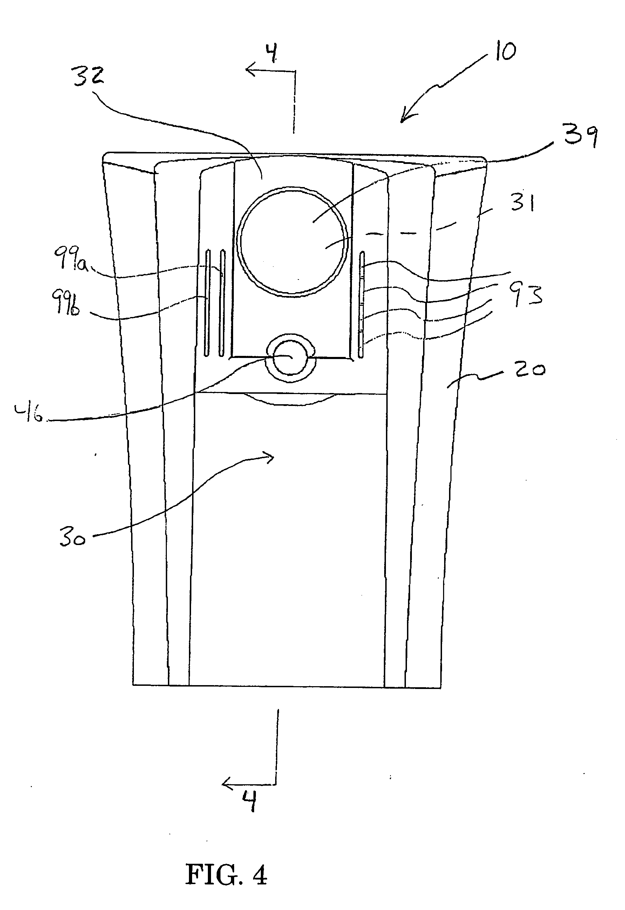

Referring to Figures 4-8, touch pad input controls 90, preferably including buttons 93 and switches 95, are provided to vary the strength of the beverage allowing a user to select a desired strength of the beverage. Visual indicators such as LEDs 92 indicate a selected beverage strength. Preferably, the buttons 93 are light pipes, as shown, for channeling light from the LEDs 92. Visual indicators such as LEDs 97a project light through light guides 99a to indicate the amount of concentrate/extract 12 remaining. Visual indicators such as LEDs 97b project light through light guides 99b to indicate the amount of diluent 14 remaining in the reservoir 22.

User input from the input controls 90 is used by the controller 80 to determine an amount of concentrate/extract 12 to be mixed with the diluent 14. This can be done by varying the speed by which the diluent 14 is dispensed by the control valve 18, and/or by controlling the electromagnet 76 to vary the rate at which the pump device 41 pumps. Preferably, the diluent 14 is dispensed from the reservoir 22 by gravity, and the liquid concentrate/extract 12 is dispensed from the cartridge 50 at a rate which is dependent on the selected beverage strength. The controller 80 preferably compensates for a decreasing reservoir diluent level (and the resultant decreasing diluent flow rate) by adjusting the rate at which the pump device 41 pumps. The adjustment of the pumping rate of the pump device 41 can occur several times, for example 8-10 times, during the dispensing of concentrate/extract 12 and diluent 14 into a single beverage container. Alternatively, the decreasing diluent level in the reservoir 22 can be compensated for during dispensing by opening the control valve 18 wider or through the use of a pump, and the liquid concentrate/extract 12 can be dispensed from the cartridge 50 at a constant rate which is dependent only on the selected beverage strength.

Those skilled in the art will recognize that various numbers of different preset beverage strengths can be utilized and selected, for example through use of the input controls 90. Additionally, the beverage strength could be continuously variable, based on a user control with selected ranges shown as preferred for different types of beverages. Alternatively, a switch can be provided to allow a user to signal to the controller 80 which type of beverage is installed so that the controller 80 adjusts the amount of concentrate/extract 12 being dispensed accordingly. Various methods are known for identify the type of beverage concentrate/extract 12 that is in the cartridge 50, such as an affixed ID. IDs that are automatically recognized by the controller 80 through different shape or different indicia located on the cartridge 50 are available, which can be read by a contact sensor 37 located in the receiving area 31 when the cartridge 50 is installed. The ID 61 on the cartridge could also include a radio frequency identification (RFID) tag which communicates with the sensor 37, having an RFID reader, positioned as shown or anywhere in the receiving area 31. In one example, the ID 61 on the cartridge could include a barcode or computer readable symbols readable by a barcode reader or other visual-type reader positioned in the receiving area 31. Alternatively, the ID 61 could include an alignment pin for activating one of a plurality of switches to inform the controller 80 which type of beverage is installed. Alternatively, one or more functional components, for example the pump device 41, can be shaped and/or sized to indicate a beverage type, the shape and/or size of the functional component being able to be sensed by a sensor in the cartridge receiving area 31.

In addition, as shown in Figure 2, a container ID 11, for example an RFID, can be provided on the container 19 to be read by a sensor 13, for example an RFID reader, in the dispensing area 30. The container ID 11 preferably includes a user's beverage strength preference information. The beverage strength information can be preprogrammed or programmed by the user through use of an ID writer 15, for example an RFID writer in the dispensing area 30, and using the input controls 90 to indicate a user's beverage strength preference.

The controller 80 preferably records an amount of pumping cycles performed by the pump device 41 to determine the amount of concentrate/extract 12 dispensed. Accordingly, the controller 80 signals the LEDs 97a to indicate an amount of concentrate/extract 12 remaining in the cartridge 50. Further, the controller 80 preferably uses information received from the stack pipe 88 to signal the LEDs 99a to indicate a level of diluent 14 remaining in the reservoir 22.

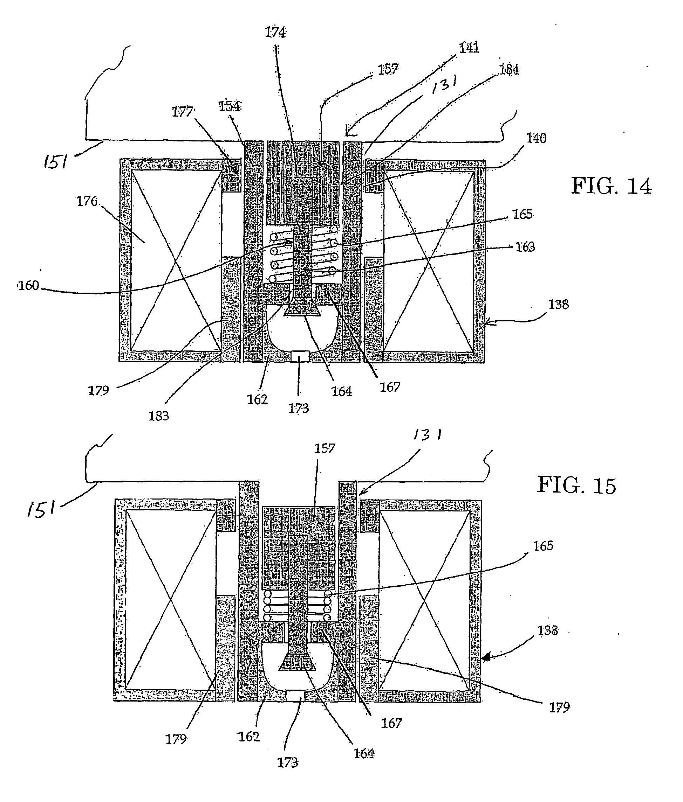

Referring to Figures 14-15, a second example of a cartridge 150 with a pump device 141 for use in a dispenser is shown. The second liquid/extract cartridge 150 dispenses a liquid extract in a dispensing area in a similar manner to the first cartridge 50. The dispenser has a cartridge receiving area 131 with an actuator 138 which is able to actuate the pump device 141 after insertion of the liquid extract cartridge 150. The method of actuation, however, differs from the first dispenser in that the actuator 138 has an electromagnet with a wound coil 176 for acting on a piston 157 locating inside the pumping device 141.

The pump device 141 preferably includes a dispensing tube 154, having an exit orifice 173 through an attached nozzle cap 162. The dispensing tube 154 is preferably sealably connected to the hollow body 151 in any suitable manner.

The pump device 141 includes a valve seat 167 connected to the dispensing tube 154. Preferably, the valve seat 167 is integrally formed with the dispensing tube 154. The valve seat 167 includes a port 183 for passing a flow of fluid concentrate/extract 12 through the dispensing tube 154. A valve stem 163 is connected to, and preferably integrally formed with, a valve body 164 forming a valve 160 for alternately covering and uncovering the port 183 in the valve seat 167. A piston 157 is connected to the valve stem 163 opposite the valve body 164 in slideable contact with or slightly spaced apart from the interior surface of the dispensing tube 154 for forcing the concentrate/extract 12 through the port 183. An annular gap 184 between the piston 157 and the dispensing tube 154 permits passing of a flow of the liquid concentrate/extract 12 from the hollow body 151 into the chamber formed between the valve seat 167 and the piston 157. The gap 184 preferably has a depth which is at least double its width to provide flow resistance at high piston velocities. An aperture 174 in the piston 157 permits assembly of the piston 157 with the valve stem 163. A spring 165 is disposed between the piston 157 and the valve seat 167 to maintain the valve body 164 in contact with the valve seat 167 and prevent a flow of fluid through the valve port 183. The piston 157 is formed of a ferromagnetic material, such as carbon steel, ferromagnetic stainless steel or iron, to permit actuation by a dispensing actuator 138, and can be coated with a food grade polymeric material. Preferably, the dispensing tube 154 and valve seat 167 are formed of a polymer material. The valve 160 and spring 165 are each preferably formed of a suitable non- ferromagnetic material, for example a polymer material or non-ferromagnetic stainless steel.

The orifice 173 of the attached nozzle cap 162 is preferably sized to permit a flow of concentrate/extract to be partially or completely atomized upon exit from the dispensing tube 154. The atomization of the fluid concentrate/extract 12 allows a more complete mixture of concentrate/extract 12 and diluent 14, preventing striping and assuring the mixture delivered to the dispensing area 30 is generally uniform and homogeneous.

The cartridge 150 dispenses the liquid concentrate/extract 112 as follows. Current is induced in the wound coil 176 by an applied voltage over the coil 176 as provided by the controller 80, causing the piston 157 to be drawn toward the electromagnetic center of the dispensing actuator 138 and against the valve seat 167. The valve body 164, which is fixed to the piston 157, follows in a downward motion with the piston 157 and is displaced from the port 183 in the valve seat 167. During the downward motion of the piston 157, liquid concentrate/extract 12 located between the piston 157 and the valve seat 167 is forced through the port 183, as it is uncovered by the valve body 164, and out through the exit orifice 173, while at the same time, fluid concentrate/extract 12 from the hollow body 51 is drawn into the area above the piston 157 in the dispensing tube 154. As described above, the hollow body 51 is preferably collapsible and collapses to facilitate the extraction of fluid concentrate/extract 12 from the hollow body. Next, the controller 80 cuts off voltage to the actuator 138, causing the piston 157 to move upwardly away from the valve seat 167 by force of the spring 165. During upward motion of the piston 157, fluid concentrate/extract flows from the area above the piston 157 through the annular gap 140 into an area between the piston 157 and the valve seat 167. A voltage, such as the preferred 24 volts direct current producing voltage, or other suitable AC or DC producing voltage, is cycled on and off to provide an intermittent current for repeating the above-described process continuously until a desired amount of the liquid concentrate/extract 12 is dispensed.

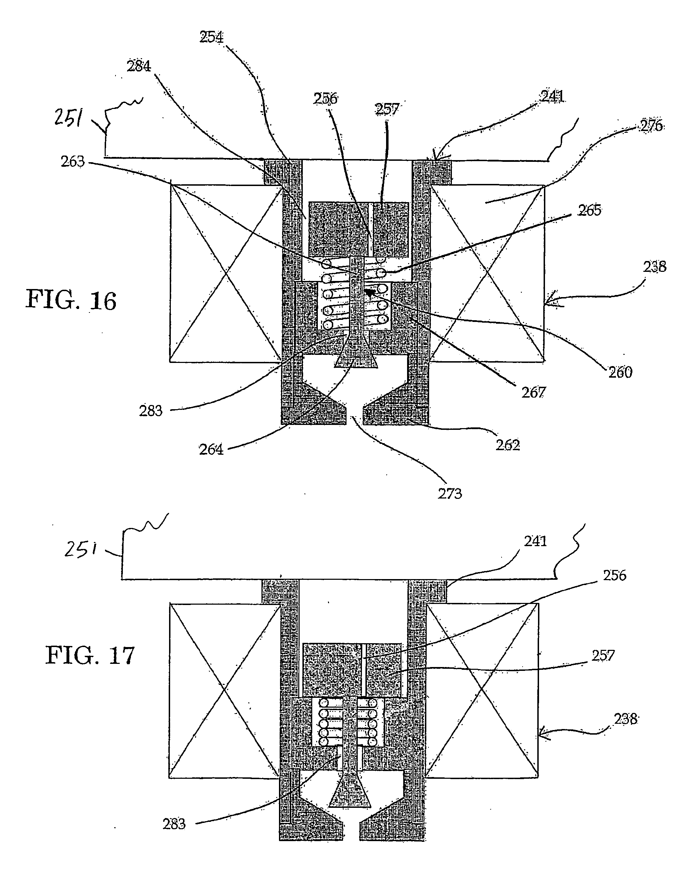

Referring to Figures 16 and 17, a third example of a cartridge 250 with a pump device 241 for use in a dispenser is shown. The pump device 241 functions in a manner similar to the pump device 141 described above. The pump device 241 preferably includes a dispensing tube 254, having an exit orifice 273 through an attached nozzle cap 262. The dispensing tube 254 is preferably sealably connected to the hollow body 251. In this example, the dispenser 10 includes an actuator 238 having an electromagnet with a wound coil 276.

The pump device 241 includes a valve seat 267 connected to the dispensing tube 254 within a space defined by an interior surface of the dispensing tube 254. The valve seat 267 includes a port 283 for passing a flow of the fluid concentrate/extract 12 through the dispensing tube 254. A valve stem 263 is connected to, and preferably integrally formed with, a valve body 264 forming a valve 260 for alternately covering and uncovering the port 283 in the valve seat 267. A piston 257 is connected to the valve stem 263 opposite the valve body 264 in slideable contact with or slightly spaced apart from the interior surface of the dispensing tube 254 for forcing the concentrate/extract 12 through the port 283. An annular gap 284 between the piston 257 and the dispensing tube 254 and a through aperture 256 permit passing of a flow of the liquid concentrate/extract 12. Each of the gap 284 and the aperture 256 preferably has a depth which is at least double their respective widths to provide flow resistance at higher piston velocities. A spring 265 is disposed between the piston 257 and the valve seat 267 to maintain the valve body 264 in contact with the valve seat 267 and prevent a flow of fluid through the valve port 283. The piston 257 is formed of a ferromagnetic material to permit actuation by the actuator 238. Preferably, the valve seat 267 is also formed of a ferromagnetic material, and accordingly, functions as a pole piece such that when the wound coil is charged, magnetic flux generally perpendicular to a bottom surface of the piston 257 is formed. Preferably, the dispensing tube 254 is formed of a polymer material. The valve 260 and spring 265 are each preferably formed of a suitable non- ferromagnetic material, for example a polymer material or non-ferromagnetic stainless steel.

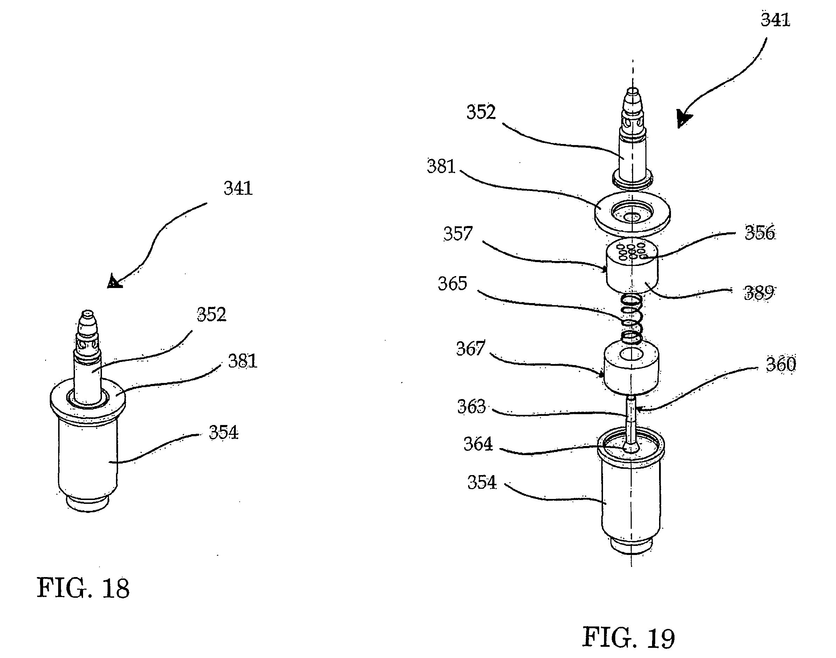

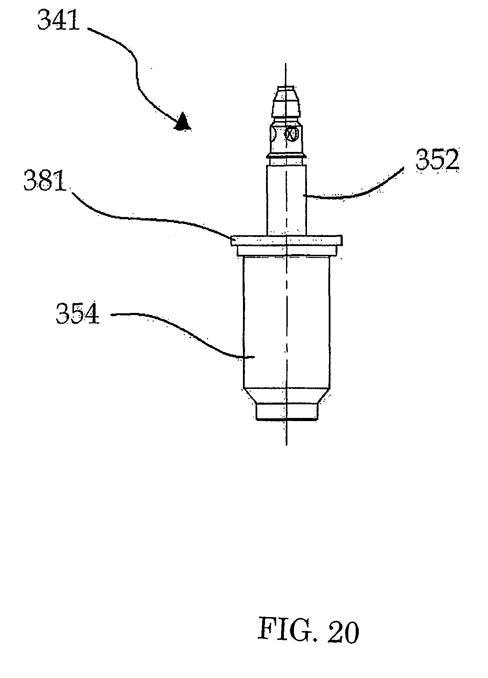

Referring to Figures 18-21, a fourth example of a cartridge 350 with pump device 341 for use in a dispenser is shown. The pump device 341 preferably includes a dispensing tube 354, having an exit orifice 373. A top cap 381 is preferably attached to an end of the dispensing tube, and a male locking connector 352 is attached to the top cap 381.

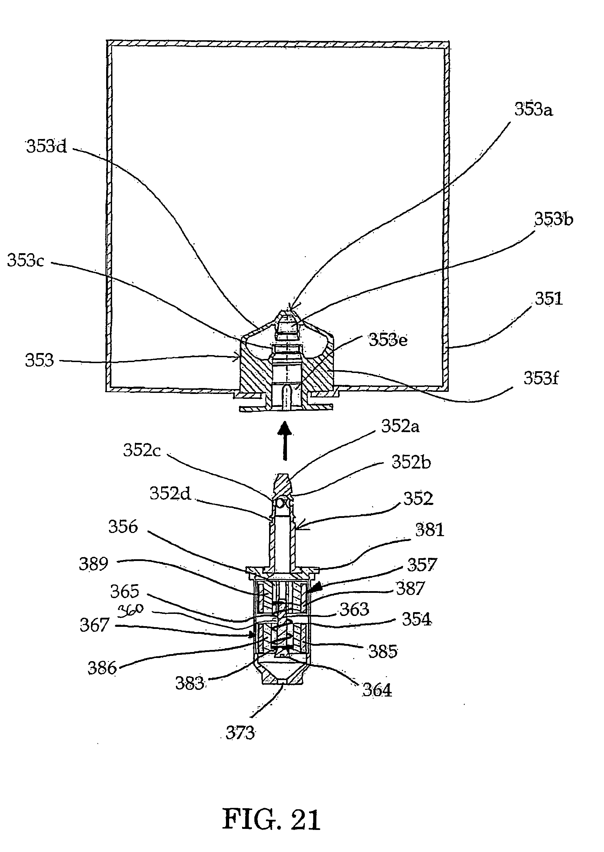

Figure 21 shows an unassembled concentrate/extract cartridge 350 including the pump device 341 and a hollow body 351. The male locking connector 352 preferably includes a conical head 352a, a circumferential groove 352b, cross passages 352c, and a ring shaped groove 352d for retaining a sealing ring. The locking connector 352 is connectable to a female mating connector 353 attached to the hollow body 351. The female mating connector 353 includes a plug 353a with a cavity 353b. The plug 353a is preferably removably or frangibly connected to a seat 353c located at an end of a bore 353e in a body 353f. In use, the male connector 352 is inserted into the bore 353e of the female connector 353 such that the conical head 352a of the male connector 352 enters the cavity 353b of the plug 353a. By inserting the male connector 352, the plug 353a is disconnected from the seat 353c allowing concentrate/extract 12 to flow from the hollow body 351, past flexible bodies 353d, through the cross passages 352c through the body of the connector 352 and into the dispensing tube 354.

The pump device 341 includes a valve seat 367 connected to the dispensing tube 354 within a space defined by an interior surface of the dispensing tube 354. The valve seat 367 includes a port 383 for passing a flow of fluid concentrate/extract 12 through the dispensing tube 354. A valve stem 363 is connected to, and preferably integrally formed with, a valve body 364 forming a valve 360 for alternately covering and uncovering the port 383 in the valve seat 367. A piston 357 is connected to the valve stem 363 opposite the valve body 364 and is in slideable contact with or slightly spaced apart from the interior surface of the dispensing tube 354 for forcing concentrate/extract 12 through the port 383. Through apertures 356 in the piston 357 permit a flow of the liquid concentrate/extract 12 to pass therethrough into a chamber formed beneath the piston 357. A spring 365 is disposed between the piston 357 and the valve seat 367 to maintain the valve body 364 in contact with the valve seat 367 and prevent a flow of fluid through the valve port 383.

Preferably, the valve seat 367 includes a first ferromagnetic material ring 385 encased in a first polymeric shell 386, and preferably the piston 357 includes a second ferromagnetic material ring 387 encased in a second polymeric shell 389. Accordingly, the valve seat 367 functions as a pole piece such that an actuator, for example the actuator 238 of the above-described third example, produces magnetic flux generally perpendicular to a bottom surface of the piston 357. The ferromagnetic material which forms the rings 385, 387 can include carbon steel, ferromagnetic stainless steel or iron. Preferably, the dispensing tube 354 is formed of a polymer material. The valve 360 and spring 365 are each preferably formed of a suitable non-ferromagnetic material, for example a polymer material or non-ferromagnetic stainless steel.

Functional efficiency of the concentrate/extract cartridge 350 (as well as the previously described concentrate/extract cartridges 50, 150, 250) is dependent in part on the proper sizing of the respective components therein, particularly components involved in pumping operations. Each of the apertures 356 is the piston 357 preferably has a depth which is at least double its respective width to provide flow resistance at higher piston velocities. Each of the apertures 356 has a depth which is 3 to 5 times its respective width. A piston flow through area, corresponding to a flow area through the apertures 356 added to a flow area through any annular gap between the outer perimeter of the piston 357 and the interior surface of the dispensing tube 354, is between 20% and 40% percent of a housing flow area, corresponding to the cross-sectional area bound by the circular perimeter of the interior surface of the dispensing tube 354. Also, it is preferred that a port flow through area, corresponding to the cross-sectional area through the port 383 minus the cross-sectional area of the valve stem 363 at the port is between 2% and 4% percent of the housing flow area. Further, it is preferred that an orifice flow through area, corresponding to a flow area through the orifice 373 is between 5% and 20% of the housing flow area, and more preferably in the range of 10% to 15%. The concentrate/extract cartridge 351 (as well as the cartridges of the other examples described above) functions on the basis of fairly complex fluid dynamic relations. Accordingly, the actual dimensions of the components of the pump device 341 necessarily vary dependent on the type of concentrate/extract, and particularly the viscosity of the concentrate/extract, and the above-noted preferred relations may be less suitable certain fluids or certain scales of the pump device 341.

A representative preferred example of the pump device 341 is dimensioned as follows. Preferably, the housing 354 has an inner diameter of between 10,2mm (0.4 inch) and 15,2mm (0.6 inch), and more preferably 13,2mm (0.52 inch). The piston 357 preferably has an outer diameter of between 7,6mm (0.3 inch) and 2,7mm (0.5 inch) and a length of between 5,1mm (0.2 inch) and 10,2mm (0.4 inch) and more preferably a diameter of 12,4mm (0.49 inch) and a length of 7,9mm (0.31 inch). The apertures 356 preferably have diameters of between 1,5mm (0.06 inch) and 2,3mm (0.09 inch), and more preferably alternating diameters of 1,9mm (0.074 inch) and 2,1mm (0.082 inch). The port 383 preferably has a diameter of between 2,3mm (0.09 inch) and 4,3mm (0.17 inch), and more preferably a diameter of 3,3mm (0.13 inch). The orifice 373 preferably has a diameter of between 1,5mm (0.06 inch) and 3mm (0.12 inch) and more preferably a diameter of 2,4mm (0.094 inch) The stem 363 preferably has a diameter at the port 383 of between 1,5mm (0.06 inch) and 3mm (0.12 inch), and more preferably a diameter of 2,4mm (0.094 inch). The first ferromagnetic material ring 385 preferably has a volume of between 246 and 574mm³ (0.015 and 0.035 cubic inches), and more preferably has a volume of 426mm³ (0.026 cubic inches). The second ferromagnetic material ring 387 preferably has a volume of between 164mm³ and 492mm³ (0.01 and 0.03 cubic inches), and more preferably has a volume of 295mm³ (0.018 cubic inches). The spring 365 preferably has a spring rate of between 0,014 and 0,021 kg/mm (0.8 and 1.2 pounds force per inch lb/in). More preferably, the spring 365 has a spring rate of 0,018 kg/mm (0.99 pounds force per inch lb/in), an outer diameter of 5,2mm (0.203 inch), an inner diameter of 4,5mm (0.179 inch), a free length of 12,7mm (0.5 inch), a wire diameter of 0,3mm (0.012 inch) and 5.75 total coils. Due to the factors stated above, the preferred example may not be suitable for dispensing all fluid types, and components of the pump device 341 may have dimensions outside of the preferred ranges and still maintain functionality.

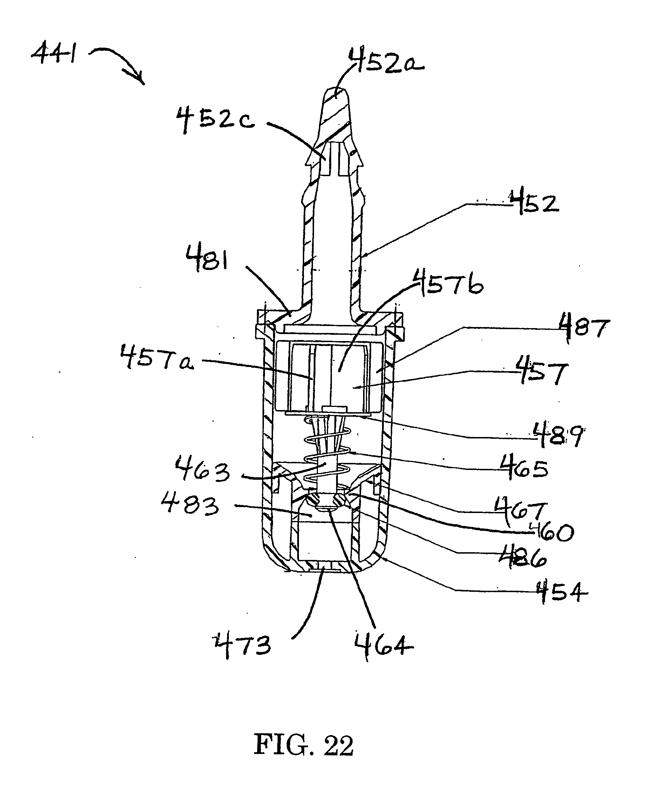

Referring to Figures 22-23, a fifth example of a cartridge 450 with pump device 441 for use in the dispenser 10 is shown. The pump device 441 preferably includes a dispensing tube 454, having an exit orifice 473. A top flange 481 is preferably attached to an end of the dispensing tube 454, and a male locking connector 452 is attached to the top flange 481. Depending on the specific arrangement, the dispensing tube 454 can be formed in one piece or a plurality of pieces that are connected together.

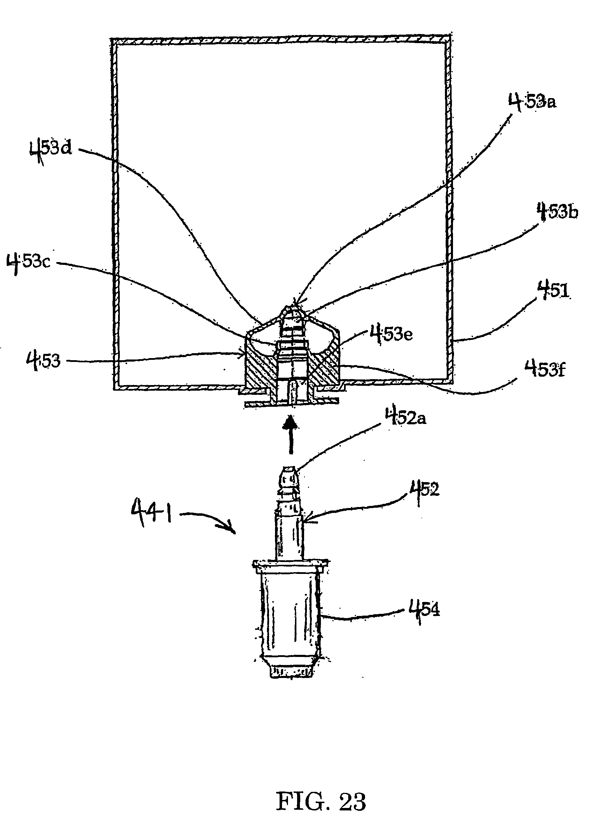

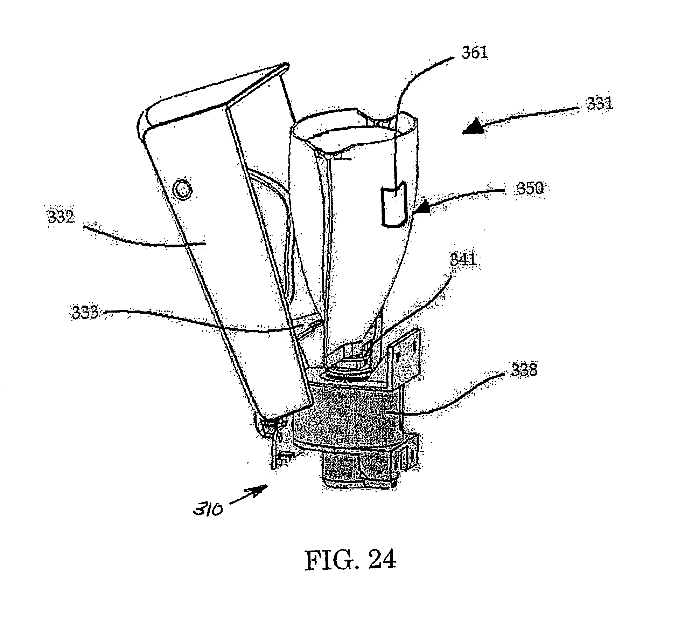

Figure 23 shows an unassembled concentrate/extract cartridge 450 including the pump device 441 and a hollow container 451. (For the sake of clarity, pump device 441 is shown in Figure 24 as a solid body. Details of the pump device 441 are illustrated in Figure 22.) The male locking connector 452 preferably includes a conical head 452a and cross passages 452c. The locking connector 452 is connectable to a female mating connector 453 attached to the hollow body 451. The female mating connector 453 includes a plug 453a with a cavity 453b. The plug 453a is preferably removably or frangibly connected to a seat 453c located at an end of a bore 453e in a body 453f. In use, the male connector 452 is inserted into the bore 453e of the female connector 453 such that the conical head 452a of the male connector 452 enters the cavity 453b of the plug 453a. By inserting the male connector 452, the plug 453a is disconnected from the seat 453c allowing concentrate/extract 12 to flow from the hollow body 451, past flexible bodies 453d, through the cross passages 452c through the body of the connector 452 and into the dispensing tube 454.

The pump device 441 includes a valve seat 467 connected to the dispensing tube 454 within a space defined by an interior surface of the dispensing tube 454. The valve seat 467 includes a port 483 for passing a flow of fluid concentrate/extract 12 through the dispensing tube 454. A valve stem 463 is connected to, and preferably integrally formed with, a valve body 464 forming a valve 460 for alternately covering and uncovering the port 483 in the valve seat 467. The valve body 464 includes an o-ring 486 to provide a seal when the valve body 464 is in contact with the valve seat 467. A piston 457 is connected to the valve stem 463 opposite the valve body 464 in slideable contact with or slightly spaced apart from the interior surface of the dispensing tube 454 for forcing concentrate/extract 412 through the port 483. The piston 457 comprises fins 457a, and the voids 457b between the fins 457a permit passing of a flow of the liquid concentrate/extract 12. A spring 465 is disposed between an expanded portion of the valve stem 463 adjacent to the piston 457 and the valve seat 467 to maintain the valve body 464 in contact with the valve seat 467 and prevent a flow of fluid through the valve port 483. The piston 457 further includes a membrane 489 positioned above an upper end of the spring 465, which is at least one of moveable and/or flexible to permit a flow of fluid into the dispensing tube 454 when the valve body 464 is in contact with the valve seat 467 and, conversely, to forcibly express fluid from the dispensing tube 454 through the orifice 473 when the piston 457 is actuated (i.e., when the valve body 464 is not in contact with the valve seat 467) such that the fins 457a drive the membrane 489 downwardly. As shown in Figure 22, in another example the spring 465 maintains the center portion of the membrane 489 against the fins 457a of the piston 457 and the circumferential periphery flexes up and down with movement of the piston 457 between open and closed positions. Alternatively, there may be a space between the spring 465 and the membrane 489. In the position shown in Figure 22, the membrane 489 would shift downwardly allowing fluid to pass in the gap between the membrane 489 and ring 487 of the piston 457. Upon actuation, the piston 457 drives downwardly so that the membrane 489 is pressed against the bottom of the ring 487 for better pumping action.

The above described example of the concentrate/extract cartridges and their related dispensers include a number of functional advantages over many of the known systems. The concentrate/extract cartridges 50, 150, 250, 350 and 450 allow the dispensing of precise amounts of concentrate/extract consistent and reproducible results. The cartridges 50, 150, 250, 350 and 450 include inexpensive components which allow them to be disposable in certain applications. The dispenser 10 can be adapted to use the actuator 138, 238 and use the cartridges 150, 250, 350, 450 and dispense a variety of other viscous fluids, besides the aforementioned hot coffee, tea and/or chocolate, or other beverage flavors, baby formula, fluid condiments, fluid medicine, detergents and laundry or cleaning additives and endless other food and non-food products. Also, the dispenser 10, if desired, could dispense viscous fluids into a container alone, without a diluent, for viscous fluids which do not require dilution. Further, the dispenser 10 could be incorporated into a multitude of other dispensing devices, for example, replaceable bottle office-style hot/cold water dispensers, and home and commercial refrigerators.

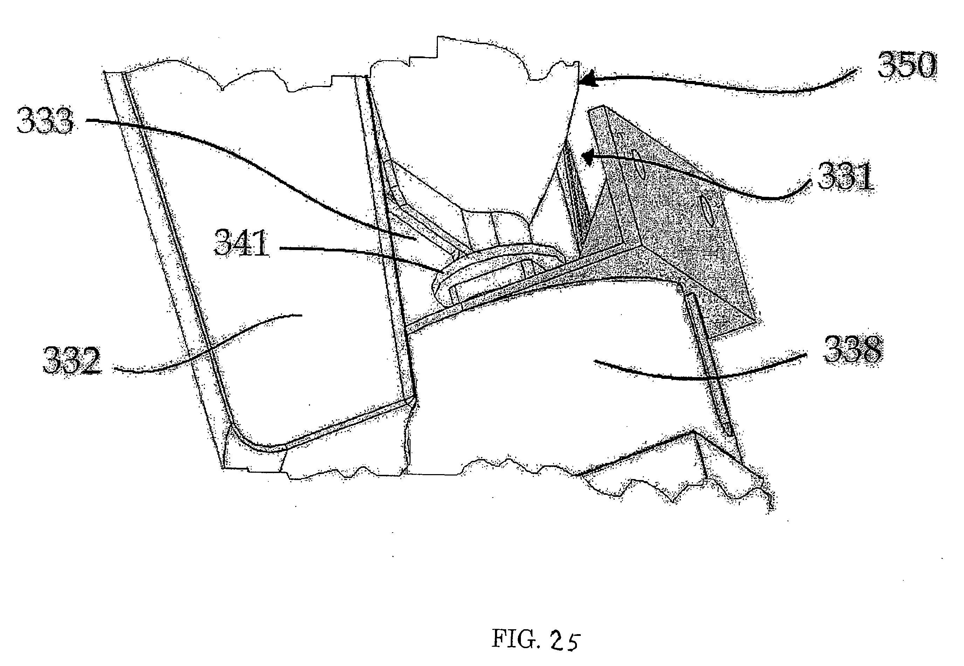

Figures 24 and 25 show the cartridge 350 with the pumping device 341 inserted in an accompanying cartridge receiving area 331 of a direct dispenser 310 in accordance with a sixth example. This example is capable of being installed into existing types of liquid mixing or dispensing systems to fulfill various regulated dispensing applications. In this example, a loading door 332 is pivotably mounted to the dispenser 310 at a bottom portion of the loading door 332, similar to the loading door 32 described above. Figure 25 shows the loading door 332 in an open position in which the concentrate/extract cartridge 350, preferably having an ID 361, can be loaded into the cartridge receiving area 331 with its pump device 341 being received in an actuator 338.

A separate controller or the controller of the existing equipment is provided to signal the actuator 338 with alternating or direct current in the same manner as discussed above in connection with the controller 80 to dispense liquid from the cartridge 350. Figure 25 shows the door 332 in a closed position in which a retaining plate 333 rigidly attached to the door 332 contacts, or alternatively, resides in close proximity to a top portion of the pumping device 341 to retain the cartridge 350 in position. This configuration prevents the door from being closed when the concentrate/extract cartridge 350 is not properly positioned in the cartridge receiving area 331.

According to another example of the dispenser for use with a concentrate extract cartridge 150, the dispensing actuator similar to actuator 138 is fixed within the cartridge receiving area 331. The dispensing actuator includes an electromagnet which preferably comprises a magnetic flux focusing ring and a pole piece 179, both made of ferromagnetic material, and a wound coil, which are same as those in the actuator 138. The electromagnet receives current, such as alternating or direct current, from the controller. In this example, the controller intermittently provides 24 volts over the coil to produce currents which induce an intermittent magnetic field.

The direct dispenser 310 can easily be modified for use with any of the different types of cartridges 50, 150, 250, 350, 450 described above by use of the associated actuator.

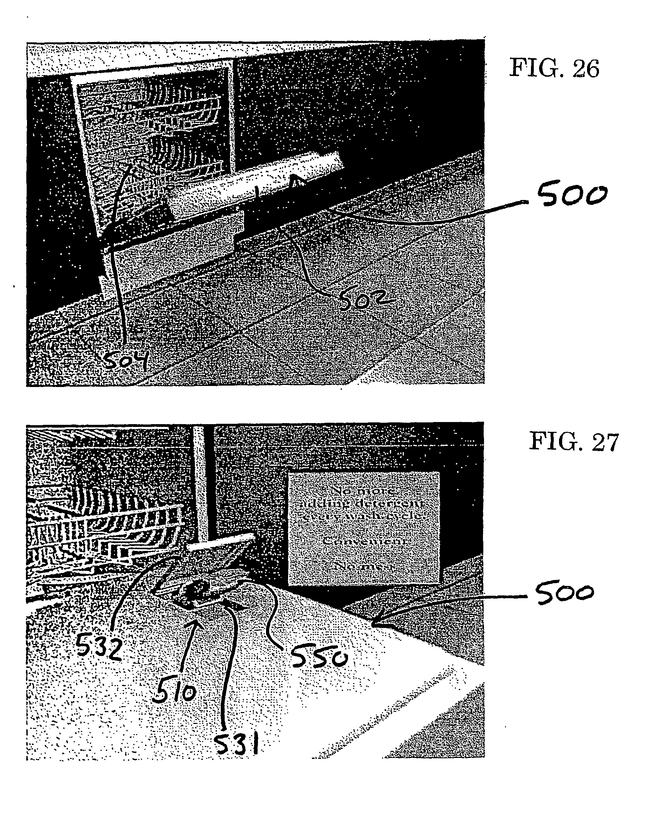

Referring to Figures 26-27, a dishwasher 500 according to a preferred embodiment of the present invention is shown. The dishwasher 500 includes a liquid detergent dispenser 510, similar to the direct dispenser 310, adapted to dispense metered amounts of concentrated liquid detergent 512 from a cleaning agent cartridge 550. Alternatively, the cleaning agent cartridge 550 can include other cleaning agents, for example anti-spotting agents. The cleaning agent cartridge 550 is similar to any one of the concentrate/extract cartridges 50,150, 250, 350 and 450 described above in the previous preferred embodiments.

The dishwasher 500 includes a main door 502 for access to a dish containment area 504. The dispenser 510 is preferably located in the main door 502, and includes a dispenser door 532 which opens into a cartridge receiving area 531 having an actuator 538 similar to the actuators 38, 138 described above. Alternatively, the dispenser 510 could be located in another position in the dishwasher 500, or could allow insertion from outside the dishwasher door 502. The cleaning agent cartridge 550, when loaded into the receiving area 531, is controlled by the actuator 538 to dispense liquid detergent 512 or another suitable cleaning agent into the dish containment area 504 during a wash cycle of the dishwasher 500. Preferably, a controller 580 controls an amount of liquid detergent 512 dispensed by the actuator 538, as well as timing of the dispensing, depending on a type of selected wash cycle. This can also be adjusted based on a sensor detecting the cleanliness of the articles that are washed so that additional detergent could be dispensed if needed.

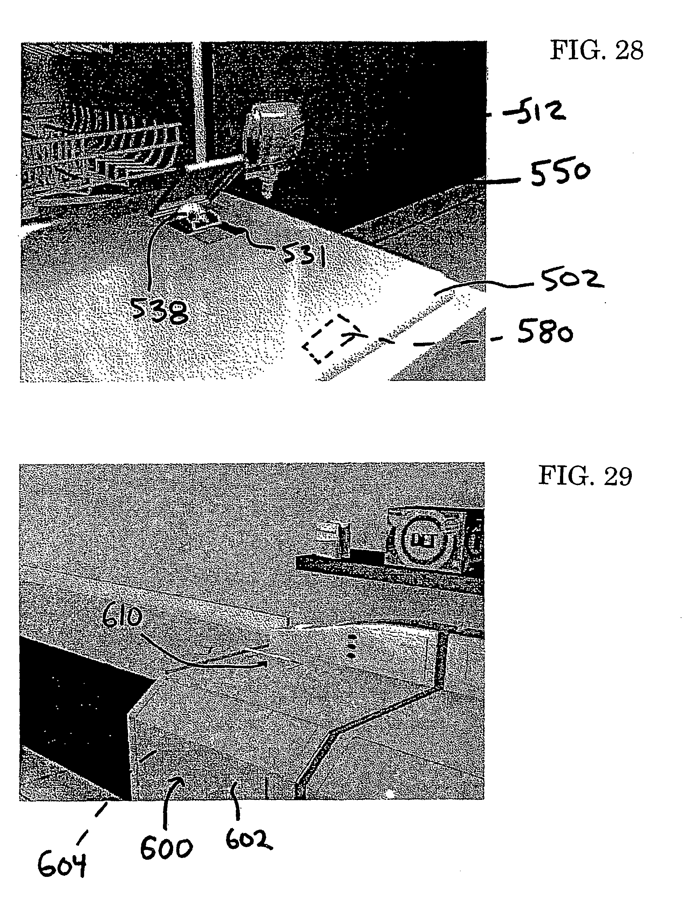

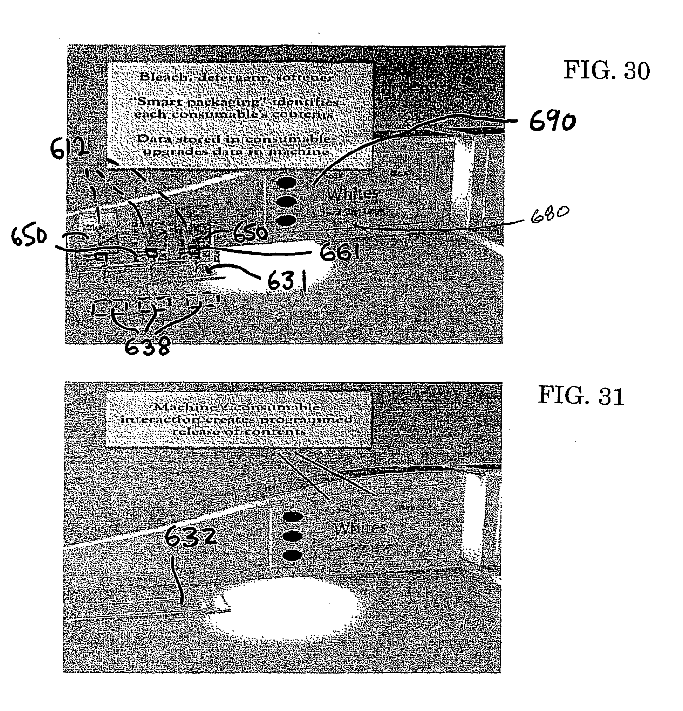

Referring to Figures 29-31, a clothes washer 600 according to a further embodiment of the present invention is shown. The clothes washer 600 includes a liquid laundry chemical dispenser 610, similar to the direct dispenser 310, adapted to dispense metered amounts of concentrated laundry chemicals 612 from laundry chemical cartridges 650. The laundry chemicals 612 can include detergent, fabric softener, bleach, water conditioner or any suitable laundry product. The laundry chemical cartridges 650 are similar to the cartridges 50, 150, 250, 350, 450 and 550 described above.

The clothes washer 600 includes a main door 602 for access to a wash area 604. The dispenser 610 includes a loading door 632 which opens into a cartridge receiving area 631 having a plurality of actuators 638, each similar to the actuator 38, 138 described above, positioned therein. Each of the actuators 638 is adapted to control one of the cartridges 650, which are removably positioned in the receiving area 631. Alternatively, a single actuator 638 can be provided, and the cartridges 650 can be selectively positioned in proximity to the single actuator 638, for example using a mechanism such as the carousel 902 describes below. The laundry chemical cartridges 650, when loaded in the receiving area 631, are selectively controlled by the actuators 638 to dispense laundry chemicals 612 into the wash area 604 during a wash cycle of the clothes washer 600. Preferably, a controller 680 controls an amount of laundry chemicals 612 dispensed by the actuators 638, as well as timing of the dispensing, depending on a selected wash cycle. Additionally, sensors can be provided to determine the level of cleanliness during washing, and additional detergent can be added, as required, by the controller 680.

An ID 661 is preferably provided on each of the cartridges 650 to indicate what type of laundry chemical 612 is in each of the cartridges 650. The controller 680 preferably uses the information contained by the IDs 661 as well as information received by user inputs entered on a control panel 690 to dispense laundry chemicals 612 in appropriate amounts at appropriate times during a wash cycle. Preferably, the controller 680 determines the amount of laundry chemical 612 dispensed from each cartridge 650 by counting a number of cycles of the actuator 638 and signals the control panel 690 to notify a user when one or more of the cartridges 650 are nearly empty.

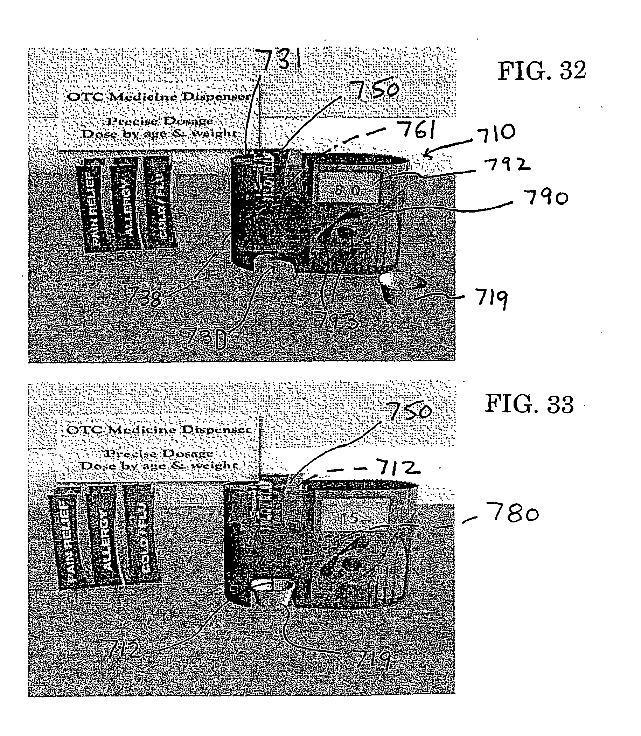

Referring to Figures 32 and 33, a medicine dispenser 710 is shown. The medicine dispenser 710 is similar to the dispense 310 and is adapted to dispense metered amounts of liquid medicine 712 from a medicine cartridge 750. The medicine 712 can include prescription or over-the-counter type medications for treating a variety of ailments. The medicine cartridge 750 is similar to the cartridges 50, 150, 250, 350, 450, 550 and 650 described above in the previous preferred embodiments.

The dispenser 710 includes a receiving area 731 having an actuator 738 similar to the actuator 38 described above. The medicine cartridge 750, when loaded in the receiving area 731, is controlled by the actuator 738 to dispense liquid medicine 712 into a container receiving area 730 where a medicine dosing container 719 receives the dispensed medicine 712.

Preferably, a controller 780 controls an amount of medicine 712 dispensed by the actuator 738. A unique ID 761 is preferably provided on each the cartridges 750 to indicate what type of medicine 712 is in the cartridge 750. Preferably, the ID 761 contains data which instructs the controller 780 to prompt a user with a display 792 to enter personal information using buttons 793 on a control panel 790. Entered personal information can include a user's age, weight, and height. The ID 761 can also contain data which instructs the controller 780 to prompt the user to enter information concerning the user's allergies or other drugs being taken by the user, to allow the controller to warn the user of potential side effects and adverse drug interactions. The controller 780 preferably uses a user's personal information along with information contained by the ID 761 to dispense an appropriate amount of medicine 712.

The controller 780 preferably determines the amount of medicine 712 dispensed from the cartridge 750 by counting a number of cycles of the actuator 738 and signals the control panel to notify a user when the cartridge 750 is nearly empty. The controller 780 can store in a memory information regarding the amount of medicine left in a plurality of different cartridges 750, associating each of the cartridges 750 with its unique ID 761, so the cartridges 750 can be rotated in and out of the dispenser 710 without affecting the stored memory.

Referring now to Figures 34 and 35, a liquid dispenser 810 adapted to dispense a mixture comprising a baby formula liquid concentrate/extract (designated by arrows 12 in a dispensing area 830) and a diluent (in a reservoir 822 and designated by arrows 14) is provided. The dispenser 810 functions in a manner similar to the dispenser 10 described above. The dispenser 810 utilizes a concentrate/extract cartridge 850 which is preferably similar to one of the concentrate/extract cartridges described above in the previous embodiments. Preferably, the dispenser 810 includes a user programmable temperature control for the diluent, so that baby formula is dispensed at a desired temperature, as well as at a desired predetermined strength.

Referring to Figures 36 and 38, a home appliance, preferably a refrigerator 900, according to a still further preferred embodiment of the present invention is shown. The refrigerator 900 includes a beverage dispenser 910 adapted to dispense a beverage comprising a liquid concentrate/extract (designated by arrows 12 in a dispensing area 930) and a diluent (designated by arrows 14). The dispenser 910 functions in a manner similar to the above discussed dispenser 10 and utilizes a concentrate/extract cartridge 950 which is preferably similar to one of the concentrate/extract cartridges 50, 150, 250, 350, 450, 550, 650, 750, 850. The refrigerator 900 preferably includes a supply line 916 connected to a home water line for providing a source of diluent 14, such as cold water, to the dispenser 910. Preferably, the supply line 916 preferably extends through a chiller 970, and a heater 972 can optionally be provided. Valves 974, 976 therefore allow a user to selectively dispense hot or cold diluent 14 to the dispensing area 330 based on inputs from a controller 980.

The dispenser 910 can also include a cartridge carousel 902, as shown in Figure 37, for storing multiple cartridges 950, and selectively rotating the cartridges 950 in and out of a cartridge receiving area 931 where concentrate/extract 12 from the cartridges 950 can be dispensed. User input controls 390, are provided to signal the controller 980 to rotate the carousel 902 to dispense a concentrate or extract from a desired one of the cartridges 950. Controls 990 are also preferably used to vary the strength of the beverage and to choose whether hot or cold diluent 14 is to be mixed with the concentrate/extract 12 from the chosen cartridge 950. Input controls 990 are preferably used to enter preferred beverage properties when a particular one of the cartridges 950 is first loaded onto the carousel 902, such that the controller 980 dispenses a beverage with preferred properties associated with the particular cartridge 950 each time that the particular cartridge 950 is selected and positioned in the receiving area 931 by the carousel 902. Preferably, an ID 961 is provided on each of the cartridges 950 to indicate the type of beverage concentrate/extract 12 that is in each of the cartridges 950. The controller 980 preferably uses the information contained by the ID 961 as well as information received by user inputs to dispense concentrate/extract 12 and hot or cold diluent 14 in appropriate proportions. Visual indicators such as digital displays 992 indicate a selected beverage type and/or selected beverage preferences.

Referring to Figures 39-40, a water dispenser 1010 according to a twelfth example is shown. The water dispenser 1010 is adapted to dispense a beverage comprising a liquid concentrate/extract (designated by arrows 12 in a dispensing area 1030) and a diluent (designated by arrows 14). The water dispenser 1010 functions in a manner similar to the dispenser 10 and utilizes a concentrate/extract cartridge 1050 which is preferably similar to any of the concentrate/extract cartridges discussed above. A supply of diluent 14 is held in a replaceable bottle 1022 of the type typically used in known bottle-fed water dispensers.

The above include a number of functional advantages over many of the known dispensing systems. The concentrate/extract cartridges 50, 150, 250, 350, 450, 550, 650, 750, 850, 950, and 1050 allow the dispensing of precise amounts of liquid with consistent and reproducible results. The cartridges 50, 150, 250, 350, 450, 550, 650, 750, 850, 950, and 1050 include inexpensive components which allow them to be disposable in certain applications. The dispensers 10, 310, 510, 610, 710, 810, 910 and 1010 can be adapted to hold and dispense a variety of viscous fluids besides those mentioned.

While the preferred embodiments of the invention have been described in detail above, the invention is not limited to the specific embodiments described which should be considered as merely exemplary. Further modifications and extensions of the present invention may be developed and all such modifications are deemed to be within the scope of the present invention as defined by the appended claims.

## Claims

1. An appliance including a dispenser for a liquid, comprising:
a housing (354) including a dispensing area (30, 330, 730, 830, 930, 1030) for dispensing a fluid;
a cartridge receiving area (31, 131, 331, 531, 631, 931) in the housing (354);
an electromagnetic dispensing actuator (38, 138, 238, 338, 538, 638, 738) located in the housing (354);
a concentrate/extract cartridge (50, 150, 250, 250, 350, 450, 550, 650, 750 850, 950, 1050) removably insertable into the cartridge receiving area (31, 131, 331, 531, 631, 931) in a position to be actuated by the dispensing actuator (38, 138, 238, 338, 538, 638, 738), the concentrate/extract cartridge (38, 138, 238, 338, 538, 638, 738) adapted to hold a fluid to be dispensed into the dispensing area (30, 330, 730, 830, 930, 1030) after placement into the cartridge receiving area (31, 131, 331, 531, 631, 931), the concentrate/extract cartridge (50, 150, 250, 250, 350, 450, 550, 650, 750 850, 950, 1050) comprising:
a hollow body (51, 151, 251, 351, 451) adapted to contain the fluid to be dispensed;
a dispensing tube (54, 154, 254, 354, 454) connected to the hollow body (51, 151, 251, 351, 451);
a piston (157, 257, 357, 457) located in the dispensing tube (54, 154, 254, 354, 454); and
a valve (160, 260, 360, 460) having a valve stem (163, 263, 363, 463) that passes through a port (183, 283, 383, 483) of a valve seat (167, 267, 367, 467) connected to the dispensing tube (54, 154, 254, 354, 454), the port (183, 283, 383, 483) defining a flow passage through the dispensing tube (54, 154, 254, 354, 454), and a valve body (164, 264, 364, 464) located at a second end of the valve stem (163, 263, 363, 463) in removable contact with the valve seat (167, 267, 367, 467), for alternately opening and closing the port (183, 283, 383, 483); and
a controller (80, 580, 680, 780, 980) located in the housing (354) to control the actuator (38, 138, 238, 338, 538, 638, 738) to discharge a desired amount of fluid to be dispensed from the cartridge (50, 150, 250, 250, 350, 450, 550, 650, 750 850, 950, 1050),
**characterised in that** the piston has a piston flow through area, corresponding to a flow area of through apertures in the piston added to a flow area through an annular gap between the outer perimeter of the piston and an interior surface of the dispensing tube, of between 20% to 40% of a flow area defined by the interior surface of the dispensing tube, wherein the through apertures have a depth which is three to five times their respective width.

2. An appliance (900, 500, 600, 1010) according to claim 1, wherein the valve stem (463) is connected to the piston (457) at a first end of the valve stem (463), the piston (457) includes a membrane (489) configured to permit a flow of fluid into the dispensing tube (454) when the valve body (464) is in contact with the valve seat (467) and to forcibly express the fluid from the dispensing tube (454) when the piston (457) is moved downwardly and the valve body (464) is moved from a contact position with the valve seat (467).

3. The appliance (900, 500, 600, 1010) of claim 2, wherein the piston (457) comprises ferromagnetic material.

4. The appliance (900, 500, 600, 1010) of claim 2, wherein the valve seat (467) comprises ferromagnetic material.

5. The appliance (900, 500, 600, 1010) of claim 4, wherein the piston (457) comprises a ferromagnetic material.

6. The appliance (900, 500, 600, 1010) of claim 1, wherein the valve body (464) comprises an o-ring (486) to provide a seal with the valve seat (467) when the valve body (464) is closed.

7. The appliance (900, 500, 600, 1010) of claim 1, further comprising a diluent supply line connected to at least one of a pump (41, 141, 241, 341, 441) and a control valve (18) for delivering a stream of diluent with the fluid, wherein the dispensing tube (54, 154, 254, 354, 454) of the concentrate/extract cartridge (50, 150, 250, 250, 350, 450, 550, 650, 750 850, 950, 1050) is positioned to deliver a stream of the fluid into the stream of the diluent.

8. The appliance (900, 500, 600, 1010) of claim 4, further comprising a joining tube (17) connected to the diluent supply line and removably connected to the dispensing tube (454) of the concentrate/ extract cartridge (50, 150, 250, 250, 350, 450, 550, 650, 750 850, 950, 1050), wherein the diluent supply line is positioned to deliver a stream of diluent into the joining tube (17) generally perpendicular to a stream of concentrate/extract delivered into the joining tube (17) by the dispensing tube (454).

9. The appliance (900, 500, 600, 1010) of claim 1, wherein the piston (157, 257, 357, 457) comprises a ferromagnetic element and wherein the actuator (38, 138, 238, 338, 538, 638, 738) comprises;
a wound coil (176, 276) for producing a magnetic flux;
a focusing ring made of a ferromagnetic material connected to the coil (176, 276) in proximity to the dispensing tube (54, 154, 254, 354, 454); and
a pole piece (179) made of a ferromagnetic material connected to the coil (176, 276) in proximity to the dispensing tube (54, 154, 254, 354, 454) spaced from the focusing ring.

10. The appliance (900, 500, 600, 1010) of claim 1, wherein the dispensing actuator (38, 138, 238, 338, 538, 638, 738) includes an aperture for removably receiving the dispensing tube (54, 154, 254, 354, 454) of the concentrate/extract cartridge (50, 150, 250, 250, 350, 450, 550, 650, 750 850, 950, 1050), and the dispenser further comprises a loading door (332, 632) which includes a retaining plate (333), the loading door (332, 632) being pivotably attached to the housing (354), wherein in a closed position of the loading door (332, 632), the retaining plate (333) holds the dispensing tube (54, 154, 254, 354, 454) within the aperture in the actuator (38, 138, 238, 338, 538, 638, 738) to retain the concentrate/extract cartridge in the housing (354), and wherein in an open position of the loading door (332, 632), the concentrate/extract cartridge is removable from the housing (354).

11. The appliance (900, 500, 600, 1010) of claim 1, wherein the dispensing tube (54) includes a top and bottom flexing member (82, 84), and the piston is connected to an intermediate portion of the dispensing tube (54) between the top and bottom flexing members (82, 84), the valve stem (63) extends through an opening in the piston and the valve seat (67) is located on a side of the piston facing the valve body (64), the piston being moveable up and down through flexing of the top and bottom flexing members.

12. The appliance (900, 500, 600, 1010) of claim 1, wherein the appliance is a refrigerator (900) or a water cooler (1010), and the dispensing tube (54, 154, 254, 354, 454) is directed toward a water outlet, the controller controls the dispensing actuator (38, 138, 238, 338, 538, 638, 738) such that the fluid from the concentrate/extract cartridge (50, 150, 250, 250, 350, 450, 550, 650, 750 850, 950, 1050) is dispensed as the water is dispensed from the appliance (900, 1010).

13. The appliance (900, 500, 600, 1010) of claim 1, wherein the controller controls other appliance functions, such as temperature.

14. The appliance (900, 500, 600, 1010) of claim 1, wherein the appliance is a dish washer (500) or a washing machine (600), and the controller controls the washing cycle and the dispensing of a predetermined or programmable amount of fluid from the cartridge (50, 150, 250, 250, 350, 450, 550, 650, 750 850, 950, 1050) in accordance with a predetermined time in the washing cycle.

15. The appliance of claim 1, wherein the appliance is selected from a group consisting of a refrigerator (900), a water cooler (1010), a dish washer (500), a washing machine (600), a baby formula dispenser, a medicine dispenser and a beverage dispenser.

## Patentansprüche

1. Gerät, enthaltend ein Ausgabeeinrichtung für eine Flüssigkeit, umfassend:
ein Gehäuse (354), enthaltend einen Ausgabebereich (30, 330, 730, 830, 930, 1030) zum Ausgeben einer Flüssigkeit;
einen Patronenaufnahmebereich (31, 131, 331, 531, 631, 931) in dem Gehäuse (354);
ein elektromagnetisches Ausgabebetätigungselement (38, 138, 238, 338, 538, 638, 738), das sich in dem Gehäuse (354) befindet;
eine Konzentrat/Extrakt-Patrone (50, 150, 250, 250, 350, 450, 550, 650, 750, 850, 950, 1050), die abnehmbar in den Patronenaufnahmebereich (31, 131, 331, 531, 631, 931) eingesetzt werden kann, und zwar in einer Position, in der sie durch das Ausgabebetätigungselement (38, 138, 238, 338, 538, 638, 738) betätigt werden kann, wobei die Konzentrat/Extrakt-Patrone (38, 138, 238, 338, 538, 638, 738) so ausgelegt ist, dass sie eine in den Ausgabebereich (30, 330, 730, 830, 930, 1030) auszugebende Flüssigkeit enthält, nachdem sie in dem Patronenaufnahmebereich (31, 131, 331, 531, 631, 931) platziert wurde, wobei die Konzentrat/Extrakt-Patrone (50, 150, 250, 250, 350, 450, 550, 650, 750, 850, 950, 1050) umfasst:
einen Hohlkörper (51, 151, 251, 351, 451), der dazu ausgelegt ist, die auszugebende Flüssigkeit zu enthalten;
ein Ausgaberohr (54, 154, 254, 354, 454), das mit dem Hohlkörper (51, 151, 251, 351, 451) verbunden ist;
einen Kolben (157, 257, 357, 457), der sich in dem Ausgaberohr (54, 154, 254, 354, 454) befindet; und
ein Ventil (160, 260, 360, 460), das über eine Ventilspindel (163, 263, 363, 463) verfügt, die durch einen Anschluss (183, 283, 383, 483) eines Ventilsitzes (167, 267, 367, 467) passiert, der mit dem Ausgaberohr (54, 154, 254, 354, 454) verbunden ist, wobei der Anschluss (183, 283, 383, 483) eine Fließstrecke durch das Ausgaberohr (54, 154, 254, 354, 454) definiert, und über einen Ventilkörper (164, 264, 364, 464), der sich an einem zweiten Ende der Ventilspindel (163, 263, 363, 463) in trennbarem Kontakt mit dem Ventilsitz (167, 267, 367, 467) befindet, um den Anschluss (183, 283, 383, 483) abwechselnd zu öffnen und zu schließen; und
eine Steuerung (80, 580, 680, 780, 980), die sich in dem Gehäuse (354) befindet, um das Betätigungselement (38, 138, 238, 338, 538, 638, 738) so zu steuern, dass eine gewünschte Menge der abzugebenden Flüssigkeit von der Patrone (50, 150, 250, 250, 350, 450, 550, 650, 750 850, 950, 1050) ausgegeben wird,
**dadurch gekennzeichnet, dass** der Kolben eine Kolbendurchflussfläche hat, die einer Durchflussfläche von Durchgangsöffnungen in dem Kolben addiert zu einer Durchflussfläche durch einen ringförmigen Spalt wischen dem Außendurchmesser des Kolbens und einer Innenfläche des Ausgaberohrs entspricht, die zwischen 20 % und 40 % einer Durchflussfläche liegt, welche durch die Innenfläche des Ausgaberohrs definiert ist, wobei die Durchgangsöffnungen eine Tiefe haben, die dem Drei- bis Fünffachen ihrer jeweiligen Breite entspricht.

2. Gerät (900, 500, 600, 1010) gemäß Anspruch 1, wobei die Ventilspindel (463) an einem ersten Ende der Ventilspindel (463) mit dem Kolben (457) verbunden ist, der Kolben (457) eine Membran (489) enthält, die so konfiguriert ist, dass sie einen Durchfluss von Flüssigkeit in das Ausgaberohr (454) erlaubt, wenn sich der Ventilkörper (464) im Kontakt mit dem Ventilsitz (467) befindet, und die Flüssigkeit zwangsweise aus dem Ausgaberohr (454) herausdrückt, wenn der Kolben (457) nach unten bewegt wird und der Ventilkörper (464) aus einer Kontaktposition mit dem Ventilsitz (467) heraus bewegt wird.

3. Gerät (900, 500, 600, 1010) gemäß Anspruch 2, wobei der Kolben (457) ferromagnetisches Material umfasst.

4. Gerät (900, 500, 600, 1010) gemäß Anspruch 2, wobei der Ventilsitz (467) ferromagnetisches Material umfasst.

5. Gerät (900, 500, 600, 1010) gemäß Anspruch 4, wobei der Kolben (457) aus einem ferromagnetischem Material besteht.

6. Gerät (900, 500, 600, 1010) gemäß Anspruch 1, wobei der Ventilkörper (464) einen O-Ring (486) umfasst, um für eine Abdichtung gegenüber dem Ventilsitz (467) zu sorgen, wenn der Ventilkörper (464) geschlossen ist.

7. Gerät (900, 500, 600, 1010) gemäß Anspruch 1, des Weiteren umfassend eine Verdünnungsmittel-Versorgungsleitung, die mit mindestens einer Pumpe (41, 141, 241, 341, 441) verbunden ist, sowie ein Steuerventil (18) zur Abgabe eines Stroms von Verdünnungsmittel zusammen mit der Flüssigkeit, wobei das Ausgaberohr (54, 154, 254, 354, 454) der Konzentrat/Extrakt-Patrone (50, 150, 250, 250, 350, 450, 550, 650, 750, 850, 950, 1050) so positioniert ist, dass es einen Strom der Flüssigkeit in den Strom des Verdünnungsmittels abgibt.

8. Gerät (900, 500, 600, 1010) gemäß Anspruch 4, des Weiteren umfassend ein Verbindungsrohr (17), das mit der Verdünnungsmittel-Versorgungsleitung verbunden ist und abnehmbar mit dem Ausgaberohr (454) der Konzentrat/Extrakt-Patrone (50, 150, 250, 250, 350, 450, 550, 650, 750, 850, 950, 1050) verbunden ist, wobei die Verdünnungsmittel-Versorgungsleitung so positioniert ist, dass sie einen Strom des Verdünnungsmittels in das Verbindungsrohr (17) abgibt, und zwar im Wesentlichen senkrecht zu einem Strom von Konzentrat/Extrakt, der durch das Ausgaberohr (454) in das Verbindungsrohr (17) abgegeben wird.

9. Gerät (900, 500, 600, 1010) gemäß Anspruch 1, wobei der Kolben (157, 257, 357, 457) ein ferromagnetisches Element umfasst und wobei das Betätigungselement (38, 138, 238, 338, 538, 638, 738) umfasst:
eine gewickelte Spule (176, 276) zum Erzeugen eines Magnetflusses;
einen aus einem ferromagnetischen Material hergestellten Fokussierungsring, der in der Nähe des Ausgaberohrs (54, 154, 254, 354, 454) mit der Spule (176, 276) verbunden ist; und
einen aus einem ferromagnetischen Material hergestellten Polschuh (179), der in der Nähe des Ausgaberohrs (54, 154, 254, 354, 454) mit Abstand zum Fokussierungsring mit der Spule (176, 276) verbunden ist.

10. Gerät (900, 500, 600, 1010) gemäß Anspruch 1, wobei das Ausgabebetätigungselement (38, 138, 238, 338, 538, 638, 738) eine Öffnung zum entnehmbaren Aufnehmen des Ausgaberohrs (54, 154, 254, 354, 454) der Konzentrat/Extrakt-Patrone (50, 150, 250, 250, 350, 450, 550, 650, 750, 850, 950, 1050) enthält und die Ausgabeeinrichtung des Weiteren eine Beladungstür (332, 632) umfasst, welche eine Halteplatte (333) enthält, wobei die Beladungstür (332, 632) schwenkbar an dem Gehäuse (354) befestigt ist, wobei in einer geschlossenen Position der Beladungstür (332, 632) die Halteplatte (333) das Ausgaberohr (54, 154, 254, 354, 454) in der Öffnung in dem Betätigungselement (38, 138, 238, 338, 538, 638, 738) hält, um die Konzentrat/Extrakt-Patrone in dem Gehäuse (354) zurückzuhalten, und wobei in einer geöffneten Position der Beladungstür (332, 632) die Konzentrat/Extrakt-Patrone aus dem Gehäuse (354) entnommen werden kann.

11. Gerät (900, 500, 600, 1010) gemäß Anspruch 1, wobei das Ausgaberohr (54) ein oberes und unteres biegsames Element (82, 84) enthält und der Kolben mit einem Zwischenabschnitt des Ausgaberohrs (54) wischen den oberen und unteren biegsamen Elementen (82, 84) verbunden ist, wobei sich die Ventilspindel (63) durch eine Öffnung in dem Kolben erstreckt und sich der Ventilsitz (67) an einer Seite des Kolbens befindet, die zum Ventilkörper (64) weist, wobei der Kolben durch die Verbiegung der oberen und unteren biegsamen Elemente nach oben und unten bewegt werden kann.

12. Gerät (900, 500, 600, 1010) gemäß Anspruch 1, wobei es sich bei dem Gerät um einen Kühlschrank (900) oder einen Wasserkühler (1010) handelt und das Ausgaberohr (54, 154, 254, 354, 454) zu einem Wasserauslass gerichtet ist, wobei die Steuerung das Ausgabebetätigungselement (38, 138, 238, 338, 538, 638, 738) so steuert, dass die Flüssigkeit aus der Konzentrat/Extrakt-Patrone (50, 150, 250, 250, 350, 450, 550, 650, 750, 850, 950, 1050) ausgegeben wird, wenn das Wasser aus dem Gerät (900, 1010) ausgegeben wird.

13. Gerät (900, 500, 600, 1010) gemäß Anspruch 1, wobei die Steuerung andere Gerätefunktionen steuert, zum Beispiel die Temperatur.

14. Gerät (900, 500, 600, 1010) gemäß Anspruch 1, wobei es sich bei dem Gerät um einen Geschirrspüler (500) oder eine Waschmaschine (600) handelt und die Steuerung das Spül. bzw. Waschprogramm und die Ausgabe einer vorgegebenen oder programmierbaren Menge von Flüssigkeit aus der Patrone (50, 150, 250, 250, 350, 450, 550, 650, 750 850, 950, 1050) entsprechend einer vorgegebenen Zeit in dem Spül- bzw. Waschprogramm steuert.

15. Gerät gemäß Anspruch 1, wobei das Gerät aus einer Gruppe ausgewählt ist, die umfasst: einen Kühlschrank (900), einen Wasserkühler (1010), einen Geschirrspüler (500), eine Waschmaschine (600), eine Ausgabeeinrichtung für Säuglingsfertignahrung, eine Ausgabeeinrichtung für Medizin und eine Ausgabeeinrichtung für Getränke.

## Revendications

1. Un appareil équipé d'un distributeur pour un liquide, comprenant :
un boîtier (354) comprenant une zone de distribution (30, 330, 730, 830, 930, 1030)destinée à distribuer un fluide,
une zone de réception de cartouche (31, 131, 331, 531, 631, 931) dans le boîtier (354),
un actionneur de distribution électromagnétique (38, 138, 238, 338, 538, 638, 738) logé dans le boîtier (354),
une cartouche d'extrait/concentré (50, 150, 250, 250, 350, 450, 550, 650, 750, 850, 950, 1050) insérable de manière amovible dans la zone de réception de cartouche (31, 131, 331, 531, 631, 931) dans une position pouvant être actionnée par l'actionneur de distribution (38, 138, 238, 338, 538, 638, 738), la cartouche d'extrait/concentré (38, 138, 238, 338, 538, 638, 738)étant adaptée de façon à contenirun fluide destiné à être distribuédans la zone de distribution (30, 330, 730, 830, 930, 1030)après placement dans la zone de réception de cartouche (31, 131, 331, 531, 631, 931), la cartouche d'extrait/concentré (50, 150, 250, 250, 350, 450, 550, 650, 750, 850, 950, 1050) comprenant :
un corps creux (51, 151, 251, 351, 451) adapté de façon à contenir le fluide à distribuer,
un tube de distribution (54, 154, 254, 354, 454) raccordé aucorps creux (51, 151, 251, 351, 451),
un piston (157, 257, 357, 457) logé dans le tube de distribution (54, 154, 254, 354, 454), et
une soupape (160, 260, 360, 460) possédant une tige de soupape (163, 263, 363, 463) qui passe au travers d'un port (183, 283, 383, 483)d'un siège de soupape (167, 267, 367, 467) raccordé autube de distribution (54, 154, 254, 354, 454), le port (183, 283, 383, 483)définissantun passage d'écoulement au travers du tube de distribution (54, 154, 254, 354, 454), et un corps de soupape (164, 264, 364, 464) logé à une deuxième extrémitéde la tige de soupape (163, 263, 363, 463)en contact amovible avec le siège de soupape (167, 267, 367, 467)de façon à ouvrir et fermer de manière alternée le port (183, 283, 383, 483), et
un système de commande (80, 580, 680, 780, 980) logé dans le boîtier (354)destiné à commander l'actionneur (38, 138, 238, 338, 538, 638, 738)afin de déverserune quantité souhaitée de fluide à distribuer de la cartouche (50, 150, 250, 250, 350, 450, 550, 650, 750, 850, 950, 1050),
**caractérisé en ce que** le piston possède une zone de traversée de piston, correspondant à une zone d'écoulement d'ouvertures débouchantes dans le piston ajoutée à une zone d'écoulement au travers d'une fente annulaire entre le périmètre extérieur du piston et une surface intérieure du tube de distribution, située entre 20% à 40% d'une zone d'écoulement définie par la surface intérieure du tube de distribution, où les ouvertures débouchantes possèdent une profondeur qui est de trois à cinq fois leur largeur respective.

2. Un appareil (900, 500, 600, 1010) selon la Revendication 1, où la tige de soupape (463) est raccordée au piston (457)à une première extrémitéde la tige de soupape (463), le piston (457)est muni d'une membrane (489) configurée de façon à permettreun écoulement de fluide dans le tube de distribution (454) lorsque le corps de soupape (464)est en contact avecle siège de soupape (467) et de façon à expulser de manière forcéele fluide du tube de distribution (454) lorsque le piston (457)est déplacé vers le bas et que le corps de soupape (464)est déplacé à partird'une position de contact avecle siège de soupape (467).

3. L'appareil (900, 500, 600, 1010) selon la Revendication 2, où le piston (457) contient un matériau ferromagnétique.

4. L'appareil (900, 500, 600, 1010) selon la Revendication 2, où le siège de soupape (467) contient un matériau ferromagnétique.

5. L'appareil (900, 500, 600, 1010) selon la Revendication 4, où le piston (457) contient un matériau ferromagnétique.

6. L'appareil (900, 500, 600, 1010) selon la Revendication 1, où le corps de soupape (464) comprend une bague en O (486)destinée à former un joint avecle siège de soupape (467) lorsque le corps de soupape (464)est fermé.

7. L'appareil (900, 500, 600, 1010) selon la Revendication 1, comprenant en outreun conduit d'alimentation en diluant raccordé à au moins un élément parmiune pompe (41, 141, 241, 341, 441) et une soupape de commande (18)de façon à fournirun flux de diluant avec le fluide, où le tube de distribution (54, 154, 254, 354, 454) de la cartouche d'extrait/concentré (50, 150, 250, 250, 350, 450, 550, 650, 750, 850, 950, 1050)est positionnéde façon à fournirun flux du fluide dans le flux du diluant.

8. L'appareil (900, 500, 600, 1010) selon la Revendication 4, comprenant en outreun tube de raccordement (17) raccordé au conduit d'alimentation en diluant et raccordé de manière amovible autube de distribution (454) de la cartouche d'extrait/concentré (50, 150, 250, 250, 350, 450, 550, 650, 750, 850, 950, 1050), oùle conduit d'alimentation en diluant est positionnéde façon à fournirun flux de diluant dans le tube de raccordement (17)généralement perpendiculaire àun fluxde concentré/extraitfournidans le tube de raccordement (17) par le tube de distribution (454).

9. L'appareil (900, 500, 600, 1010) selon la Revendication 1, où le piston (157, 257, 357, 457) contient un élément ferromagnétique et où l'actionneur (38, 138, 238, 338, 538, 638, 738) comprend :
une bobine enroulée (176, 276)destinée à produireun flux magnétique,
un anneau de concentration de fluxfabriqué dansun matériau ferromagnétique raccordé à la bobine (176, 276)à proximité du tube de distribution (54, 154, 254, 354, 454), et
une pièce polaire (179) fabriquée dansun matériau ferromagnétique raccordée à la bobine (176, 276)à proximité du tube de distribution (54, 154, 254, 354, 454)espacée de l'anneau de concentration de flux.

10. L'appareil (900, 500, 600, 1010) selon la Revendication 1, où l'actionneur de distribution (38, 138, 238, 338, 538, 638, 738) comprend une ouverturedestinée à recevoir de manière amoviblele tube de distribution (54, 154, 254, 354, 454) de la cartouche d'extrait/concentré (50, 150, 250, 250, 350, 450, 550, 650, 750, 850, 950, 1050), et le distributeurcomprend en outreun portillon de chargement (332, 632) qui comprend une plaque de retenue (333), leportillon de chargement (332, 632)étant fixé de manière pivotable auboîtier (354), où dans une position ferméedu portillon de chargement (332, 632), la plaque de retenue (333) maintient le tube de distribution (54, 154, 254, 354, 454)à l'intérieur de l'ouverture dans l'actionneur (38, 138, 238, 338, 538, 638, 738)de façon à retenir la cartouche d'extrait/concentré dans le boîtier (354), et où dans une position ouvertedu portillon de chargement (332, 632), la cartouche d'extrait/concentré est amovible du boîtier (354).

11. L'appareil (900, 500, 600, 1010) selon la Revendication 1, où le tube de distribution (54) comprend un élément flexible supérieur et inférieur (82, 84), et le pistonestraccordé à une partie intermédiaire du tube de distribution (54) entre les éléments flexibles supérieur et inférieur (82, 84), la tige de soupape (63)s'étend au travers d'une ouverturedans le piston et le siège de soupape (67)estlogésur un côtédu piston faisant face au corps de soupape (64), le piston étant déplaçable vers le haut et vers le baspar une flexion des éléments flexibles supérieur et inférieur.

12. L'appareil (900, 500, 600, 1010) selon la Revendication 1, où l'appareil est unréfrigérateur (900) ou un refroidisseur d'eau (1010), et le tube de distribution (54, 154, 254, 354, 454)est dirigé versune sortie d'eau, le système de commande commandant l'actionneur de distribution (38, 138, 238, 338, 538, 638, 738)de sorte quele fluide provenant dela cartouche d'extrait/concentré (50, 150, 250, 250, 350, 450, 550, 650, 750, 850, 950, 1050) soit distribué pendant quel'eauest distribuédel'appareil (900, 1010).

13. L'appareil (900, 500, 600, 1010) selon la Revendication 1, où le système de commande commande d'autres fonctions de l'appareil, par exemple la température.

14. L'appareil (900, 500, 600, 1010) selon la Revendication 1, où l'appareil est un lave-vaisselle (500) ou un lave-linge (600), et le système de commande commande le cycle de lavage et la distribution d'une quantité prédéterminée ou programmable de fluidede la cartouche (50, 150, 250, 250, 350, 450, 550, 650, 750, 850, 950, 1050)selon un instant prédéterminédansle cycle de lavage.

15. L'appareil selon la Revendication 1, où l'appareil est sélectionné dans un groupe se composant d'un réfrigérateur (900), d'un refroidisseur d'eau (1010), d'un lave-vaisselle (500), d'un lave-linge (600), d'un distributeur de préparations pour bébés,d'un distributeur de médicaments et d'un distributeur de boissons.
